# EUROPEAN PATENT APPLICATION

(11) **EP 4 787 917 A1**
(43) Date of publication of application: **05.08.2026**
(21) Application number: 24872346.2
(22) Date of filing: 26.09.2024
(51) Int. Cl.: H04W 12/04, H04W 36/06, H04W 36/08, H04W 36/38, H04W 72/231

(54) **COMMUNICATION DEVICE, BASE STATION, AND COMMUNICATION METHOD**

(30) Priority: 28.09.2023 JP 2023168813
(71) Applicant: DENSO CORPORATION, Kariya-city, Aichi 448-8661 (JP)
(72) Inventor: MAEMOTO, Daiki, Kariya-city, Aichi 448-8661 (JP)
(74) Representative: TBK
(86) International application number: PCT/JP2024/034330
(87) International publication number: WO 2025/070560

(57) **Abstract**

A communication apparatus (100) according to an embodiment comprises: a receiver (112) configured to receive, from a base station (200), a radio resource control (RRC) message including LTM configuration information used to provide Layer 1/Layer 2 triggered mobility (LTM) candidate information, and receive, from the base station by using a medium access control (MAC) control element (CE), a cell switch command that triggers a cell switch; and a controller (120) configured to perform an LTM cell switch based on the cell switch command. The controller is configured to determine, based on an identifier included in the RRC message, whether or not to perform a security key update procedure in a case where the LTM cell switch is performed.

## Description

### Cross-Reference to Related Application

This application is based on and claims the benefit of priority from Japanese Patent Application No. 2023-168813, filed on September 28, 2023, the entire contents of which are incorporated herein by reference.

### Technical Field

The present disclosure relates to a communication apparatus, a base station, and a communication method.

### Background Art

In a mobile communication system conforming to the technical specification of the 3rd Generation Partnership Project (hereinafter, 3GPP (registered trademark)), which is a standardization project of a mobile communication system, introduction of L1 (Layer 1)/L2 (Layer 2) triggered mobility (L1/L2-Triggered Mobility: LTM) is scheduled. In the LTM, a base station transmits a cell switch command for triggering a cell switch to a communication apparatus by a medium access control control element (MAC CE) based on an L1 measurement report received from the communication apparatus, thereby switching a serving cell of the communication apparatus. The communication apparatus can dynamically perform the cell switch as compared with the cell switch based on a radio resource control (RRC) message so that a mobility delay can be reduced.

Currently, introduction of an LTM (hereinafter, the subsequent LTM) in which a UE 100 performs a cell switch from a source cell to a target cell according to the configuration information for the LTM (hereinafter, the first cell switch), and then performs a cell switch without RRC reconfiguration (that is, without receiving an RRC reconfiguration message) (hereinafter, the second cell switch) is being considered (see, for example, Non Patent Literature 1).

### Citation List

### Non Patent Literature

Non Patent Literature 1: "R2-2211101" (Report of 3GPP TSG RAN WG2 meeting #119bis-e, Online)

### Summary of Invention

A communication apparatus according to a first aspect comprises: a receiver configured to receive, from a base station, a radio resource control (RRC) message including LTM configuration information used to provide Layer 1/Layer 2 triggered mobility (LTM) candidate information, and receive, from the base station by using a medium access control (MAC) control element (CE), a cell switch command that triggers a cell switch; and a controller configured to perform an LTM cell switch based on the cell switch command. The controller is configured to determine, based on an identifier included in the RRC message, whether or not to perform a security key update procedure in a case where the LTM cell switch is performed.

A base station according to a second aspect comprises: a transmitter configured to transmit, to a communication apparatus, a radio resource control (RRC) message including LTM configuration information used to provide Layer 1/Layer 2 triggered mobility (LTM) candidate information, and transmit, to the communication apparatus by using a medium access control (MAC) control element (CE), a cell switch command that triggers a cell switch; and a controller (230) configured to control performance of an LTM cell switch based on the cell switch command, wherein the controller is configured to configure, based on an identifier included in the RRC message, whether or not to perform a security key update procedure in a case where the LTM cell switch is performed.

A communication method according to a third aspect is a communication method performed by a communication apparatus. The communication method of a communication apparatus comprises the steps of: receiving, from a base station, a radio resource control (RRC) message including LTM configuration information used to provide Layer 1/Layer 2 triggered mobility (LTM) candidate information; receiving, from the base station by using a medium access control (MAC) control element (CE), a cell switch command that triggers a cell switch; and performing an LTM cell switch based on the cell switch command, wherein the step of performing the LTM cell switch includes determining, based on an identifier included in the RRC message, whether or not to perform a security key update procedure in a case where the LTM cell switch is performed.

### Brief Description of Drawings

Objects, features, advantages, and the like of the present disclosure will become more apparent from the following detailed description with reference to the accompanying drawings.
Fig. 1 is a diagram illustrating a configuration of a mobile communication system according to an embodiment.
Fig. 2 is a diagram illustrating a configuration example of a protocol stack according to the embodiment.
Fig. 3 is a diagram for describing an overview of LTM.
Fig. 4 is a diagram illustrating a configuration of a UE according to the embodiment.
Fig. 5 is a diagram illustrating a configuration of a base station according to the embodiment.
Fig. 6 is a sequence diagram (part 1) for describing a first operation example according to the embodiment.
Fig. 7 is a sequence diagram (part 2) for describing the first operation example according to the embodiment.
Fig. 8 is a diagram for describing a hierarchical structure of an RRC reconfiguration message according to the embodiment.
Fig. 9 is a flowchart (part 1) for describing a determination operation example according to the embodiment.
Fig. 10 is a flowchart (part 2) for describing a determination operation example according to the embodiment.
Fig. 11 is a diagram for describing an operation example of a UE 100 according to the embodiment.
Fig. 12 is a flowchart (part 3) for describing the determination operation example according to the embodiment.
Fig. 13 is a sequence diagram (part 1) for describing a second operation example according to the embodiment.
Fig. 14 is a sequence diagram (part 2) for describing the second operation example according to the embodiment.
Fig. 15 is a flowchart (part 1) for describing an example of a distinguishing method according to the embodiment.
Fig. 16 is a flowchart (part 2) for describing an example of the distinguishing method according to the embodiment.

### Description of Embodiments

A mobile communication system according to an embodiment will be described with reference to the drawings. In the description of the drawings, the same or similar parts are denoted by the same or similar reference numerals.

As a case where the LTM (including the subsequent LTM) is executed, in addition to a case where a base station that manages a source cell manages a target cell (that is, a cell switch in the same base station), a case where a base station different from the base station that manages the source cell manages the target cell (so-called a cell switch between different base stations) is also assumed to be introduced in the future.

Here, if the cell switch is performed from the source cell to the target cell by the LTM, the UE 100 cannot distinguish whether the target base station that manages the target cell to be switched is the same as the base station that manages the source cell. Therefore, there is a concern that the UE 100 cannot appropriately perform a security key update procedure, for example, by constantly performing the security key update procedure even in the cell switch in the same base station or not performing the security key update procedure in the cell switch between different base stations.

Therefore, an object of the present disclosure is to provide a communication apparatus, a base station, and a communication method capable of appropriately performing the security key update procedure in the LTM.

### (System Configuration)

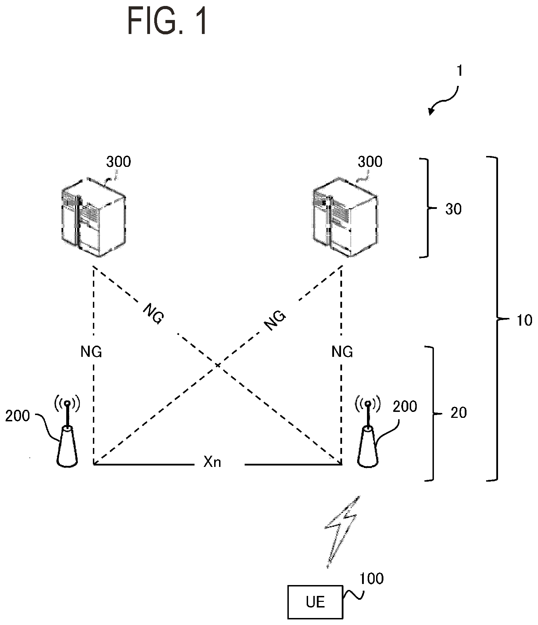

First, a configuration of a mobile communication system 1 according to the present embodiment is described with reference to Fig. 1. The mobile communication system 1 is, for example, a system conforming to a technical specification (TS) of 3GPP. Hereinafter, description is made with an example in which the 5th generation system (5G system) of the 3GPP standard, that is, a mobile communication system based on a new radio (NR) access is used as the mobile communication system 1.

The mobile communication system 1 includes a network 10 and a user equipment (UE) 100 that communicates with the network 10. The network 10 includes a next generation radio access network (NG-RAN) 20, which is a 5G radio access network, and a 5G core network (5GC) 30, which is a core network of 5G.

The UE 100 is a communication apparatus that communicates with a base station 200. The UE 100 may be an apparatus used by a user. The UE 100 is, for example, a mobile apparatus such as a mobile phone terminal such as a smartphone, a tablet terminal, a notebook PC, a communication module, or a communication card. The UE 100 may be a vehicle (for example, a car, a train, or the like) or an apparatus provided in the vehicle (for example, a vehicle UE). The UE 100 may be a transport body other than the vehicle (for example, a ship, an airplane, or the like) or an apparatus provided in the transport body (for example, an aerial UE). The UE 100 may be a sensor or an apparatus provided in the sensor. Note that the UE 100 may be referred to as another term such as a terminal, a terminal apparatus, a mobile station, a mobile terminal, a mobile apparatus, a mobile unit, a subscriber station, a subscriber terminal, a subscriber apparatus, a subscriber unit, a wireless station, a wireless terminal, a wireless apparatus, a wireless unit, a remote station, a remote terminal, a remote apparatus, or a remote unit. The UE 100 is an example of a terminal, and the terminal may include a factory device or the like.

The NG-RAN 20 includes a plurality of base stations 200. Each base station 200 manages at least one cell. One or the plurality of base stations 200 may correspond to one or a plurality of cells. In the present embodiment, the base station 200 may be replaced with a cell. The cell configures a minimum unit of a communication area. One cell belongs to one frequency (carrier frequency). The term "cell" may indicate a radio communication resource and may also indicate a communication object of the UE 100. Each base station 200 can perform radio communication with the UE 100 existing in its own cell. The base station 200 communicates with the UE 100 using a protocol stack of RAN. Details of the protocol stack are described below. Also, the base station 200 is connected to another base station 200 (may be referred to as a neighboring base station) via an Xn interface. The base station 200 communicates with the neighboring base station via the Xn interface. Also, the base station 200 provides NR user plane and control plane protocol terminations toward the UE 100 and is connected to the 5GC 30 via an NG interface. Such a base station 200 of NR may be referred to as a gNodeB (gNB).

The 5GC 30 includes a core network apparatus 300. The core network apparatus 300 includes, for example, an access and mobility management function (AMF) and/or a user plane function (UPF). The AMF performs mobility management of the UE 100. The UPF provides a feature specialized for U-plane processing. The AMF and the UPF are connected to the base station 200 via the NG interface.

### (Configuration Example of Protocol Stack)

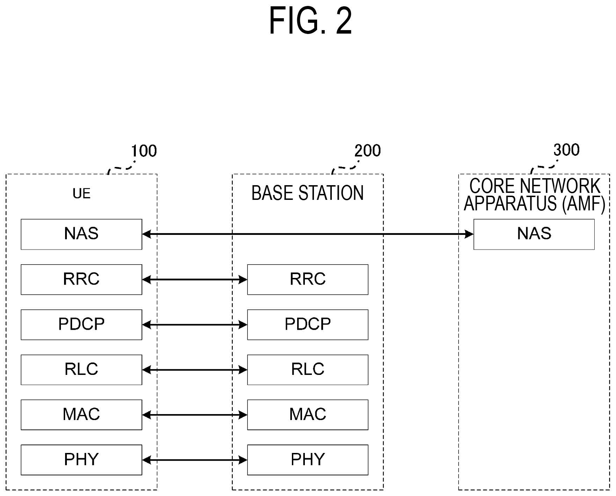

Next, a configuration example of the protocol stack according to the present embodiment will be described with reference to Fig. 2.

A protocol of a radio section between the UE 100 and the base station 200 includes a physical (PHY) layer, a medium access control (MAC) layer, a radio link control (RLC) layer, a packet data convergence protocol (PDCP) layer, and a radio resource control (RRC) layer.

The PHY layer performs coding and decoding, modulation and demodulation, antenna mapping and demapping, and resource mapping and demapping. Data and control information are transmitted between the PHY layer of the UE 100 and the PHY layer of the base station 200 via a physical channel.

The MAC layer performs priority control of data, retransmission processing by hybrid ARQ (HARQ), random access procedure, and the like. Data and control information are transmitted between the MAC layer of the UE 100 and the MAC layer of the base station 200 via a transport channel. The MAC layer of the base station 200 includes a scheduler. The scheduler determines uplink and downlink transport formats (transport block size, modulation and coding scheme (MCS)) and resources to be allocated to the UE 100.

The RLC layer transmits data to the RLC layer on a reception side using features of the MAC layer and the PHY layer. Data and control information are transmitted between the RLC layer of the UE 100 and the RLC layer of the base station 200 via a logical channel.

The PDCP layer performs header compression and decompression and encryption and decryption.

A service data adaptation protocol (SDAP) layer may be provided as an upper layer of the PDCP layer. The service data adaptation protocol (SDAP) layer performs mapping between an IP flow serving as a unit in which a core network performs quality of service (QoS) control and a radio bearer serving as a unit in which an access stratum (AS) performs QoS control.

The RRC layer controls the logical channel, the transport channel, and the physical channel in response to establishment, reestablishment, and release of the radio bearer. RRC signaling for various configurations is transmitted between the RRC layer of the UE 100 and the RRC layer of the base station 200. In a case where an RRC connection exists between the RRC of the UE 100 and the RRC of the base station 200, the UE 100 is in an RRC connected state. In a case where no RRC connection exists between the RRC of the UE 100 and the RRC of the base station 200, the UE 100 is in an RRC idle state. In a case where an RRC connection between the RRC of the UE 100 and the RRC of the base station 200 is suspended, the UE 100 is in an RRC inactive state.

An NAS layer located above the RRC layer in the UE 100 performs session management and mobility management of the UE 100. NAS signaling is transmitted between the NAS layer of the UE 100 and the NAS layer of the core network apparatus 300.

Note that the UE 100 includes an application layer and the like in addition to a protocol of a radio interface.

### (Radio Frame Configuration)

In the 5G system, downlink transmission and uplink transmission are configured in a radio frame of 10 ms duration. For example, the radio frame is expressed by a system frame number (SFN) of 0 to 1023. For example, the radio frame is configured with 10 subframes. For example, one subframe may be 1 ms. Also, one subframe may be configured with one or more slots. For example, the number of symbols configuring one slot is 14 for a normal cyclic prefix (CP) and 12 for an extended CP. Also, the number of slots configuring one subframe changes depending on a configured subcarrier spacing. For example, for the normal CP, in a case where the subcarrier spacing is configured as 15 kHz, the number of slots per subframe is one (that is, 14 symbols), in a case where the subcarrier spacing is configured as 30 kHz, the number of slots per subframe is two (that is, 28 symbols), in a case where the subcarrier spacing is configured as 60 kHz, the number of slots per subframe is four (that is, 56 symbols), and in a case where the subcarrier spacing is configured as 120 kHz, the number of slots per subframe is eight (that is, 128 symbols). For the extended CP, in a case where the subcarrier spacing is configured as 60 kHz, the number of slots per subframe is four (that is, 48 symbols). That is, the number of slots configuring one subframe is determined based on the subcarrier spacing configured by the base station 200. Also, the number of symbols configuring one subframe is determined based on the subcarrier spacing configured by the base station 200. That is, the number of symbols configuring a subframe of 1 ms is determined based on the subcarrier spacing configured by the base station 200, and a length of each symbol (a length in a time direction) changes.

### (LTM)

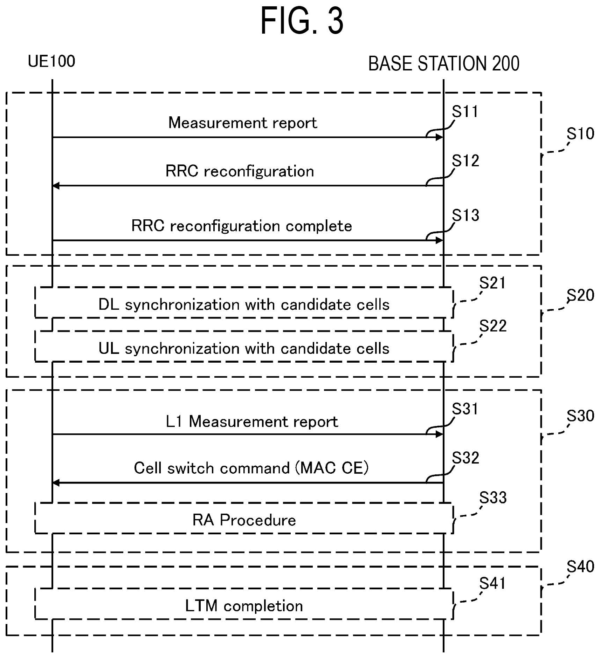

In the mobile communication system 1 conforming to the 3GPP technical specification, L1 (Layer 1)/L2 (Layer 2) triggered mobility (L1/L2-Triggered Mobility: LTM) is scheduled to be introduced. As illustrated in Fig 3, in the LTM, the following operations may be performed.

### Step S10: LTM preparation

The UE 100 in the RRC connected state may perform the following operation as the LTM preparation operation.

### Step S11:

The UE 100 transmits a measurement report (MeasurementReport) message to the base station 200. The base station 200 determines to use the LTM and initiates candidate cell preparation.

### Step S12:

The base station 200 transmits an RRC reconfiguration (RRCReconfiguration) message including the LTM candidate cell configuration of one or more candidate cells.

### Step S13:

The UE 100 stores the LTM candidate cell configuration. The UE 100 transmits an RRC reconfiguration complete (RRCReconfigurationComplete) message to the base station 200.

### Step S20: Early Synchronization

The UE 100 may perform the following operation as the operation of the early synchronization.

### Step S21:

The UE 100 performs downlink (DL) synchronization with the candidate cell before receiving a cell switch command. The UE 100 may perform DL synchronization based on a synchronization signal (SS) and a physical broadcast channel (PBCH) block (SSB).

### Step S22:

The UE 100 performs timing advance (TA) acquisition before receiving the cell switch command. The UE 100 may perform the TA acquisition based on a PDCCH order (specifically, the PDCCH ordered RACH). The PDCCH order may be triggered only by the source cell.

### Step S30: LTM Execution

The UE 100 may perform the following operation as the operation of the LTM execution.

### Step S31:

The UE 100 performs the L1 measurement on the candidate cell configured by the LTM candidate cell configuration. The UL 100 transmits a lower-layer measurement report based on the L1 measurement (hereinafter, referred to as L1 measurement report) to the base station 200.

### Step S32:

The base station 200 determines to perform a cell switch to the target cell. The base station 200 transmits the MAC CE that triggers the cell switch by including the candidate configuration index of the target cell. The UE 100 switches the configuration of the target cell.

### Step S33:

In a case where the cell switch needs to include performing a random access (RA) procedure, the UE 100 performs the RA procedure toward the target cell.

### Step S40: LTM Completion

The UE 100 may perform the following operation as the operation of the LTM completion.

### Step S41:

The UE 100 indicates that the completion of the cell switch to the target cell is successful.

Note that the UE 100 may perform steps S20 to S40 a plurality of times for a subsequent LTM cell switch based on the configuration without releasing the configuration provided in step S12.

As described above, in the LTM, the base station 200 transmits the cell switch command for triggering the cell switch to the UE 100 by the MAC CE based on the L1 measurement report received from the UE 100, whereby the serving cell of the UE 100 is changed. The UE 100 can dynamically perform the cell switch as compared with the cell switch based on an RRC message so that a mobility delay can be reduced.

Currently, introduction of an LTM (hereinafter, the subsequent LTM) in which the UE 100 performs the cell switch from a source cell to a target cell according to the configuration information for the LTM (hereinafter, the first cell switch), and then performs the cell switch without RRC reconfiguration (that is, without receiving an RRC reconfiguration message) (hereinafter, the second cell switch) is being considered.

As a case where the LTM (including the subsequent LTM) is executed, in addition to a case where a base station that manages a source cell manages a target cell (that is, the cell switch in the same base station), a case where a base station different from the base station that manages the source cell manages the target cell (so-called the cell switch between different base stations) is also assumed to be introduced in the future.

Here, if the cell switch is performed from the source cell to the target cell by the LTM, the UE 100 cannot distinguish whether the target base station that manages the target cell to be switched is the same as the base station that manages the source cell. Therefore, there is a concern that the UE 100 cannot appropriately perform a security key update procedure, for example, by constantly performing the security key update procedure even in the cell switch in the same base station or not performing the security key update procedure in the cell switch between different base stations. Therefore, an operation for enabling appropriate performance of the security key update procedure in the LTM is described below.

In addition, there is a concern that the LTM (and/or the subsequent LTM) cannot be appropriately executed because a specific operation is not specified for a case where a cell switch in the same base station and a cell switch between different base stations are mixed. Therefore, an operation for enabling the LTM to be appropriately performed will be described.

### (Configuration of User Equipment)

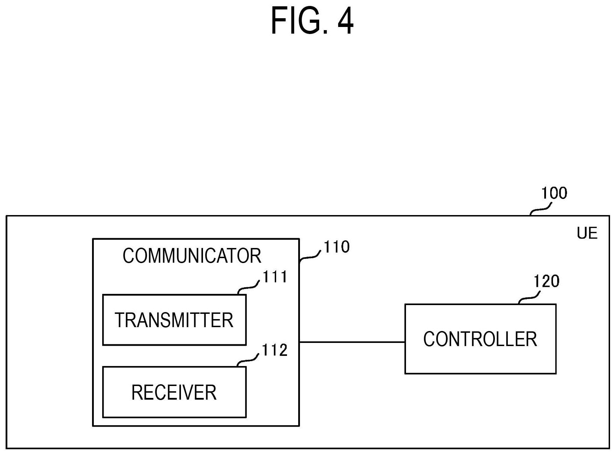

A configuration of the UE 100 according to the embodiment will be described with reference to Fig. 4. The UE 100 includes a communicator 110 and a controller 120.

The communicator 110 performs radio communication with the base station 200 by transmitting and receiving a radio signal to and from the base station 200. The communicator 110 includes at least one transmitter 111 and at least one receiver 112. The transmitter 111 and the receiver 112 may be configured with a plurality of antennas and a radio frequency (RF) circuit. The antenna converts a signal into a radio wave and emits the radio wave into a space. Furthermore, the antenna receives a radio wave in a space and converts the radio wave into a signal. The RF circuit performs analog processing of a signal transmitted and received via the antenna. The RF circuit may include a high frequency filter, an amplifier, a modulator, a low pass filter, and the like.

The controller 120 performs various types of control in the UE 100. The controller 120 controls communication with the base station 200 via the communicator 110. The operation of the UE 100 described above and described below may be an operation controlled by the controller 120. The controller 120 may include at least one processor capable of executing a program and a memory that stores the program. The processor may execute the program and perform the operation of the controller 120. The controller 120 may include a digital signal processor that performs digital processing of a signal transmitted and received via the antenna and the RF circuit. The digital processing includes processing of the protocol stack of the RAN. Note that the memory stores the program to be executed by the processor, parameters related to the program, and data related to the program. The memory may include at least one of a read only memory (ROM), an erasable programmable read only memory (EPROM), an electrically erasable programmable read only memory (EEPROM), a random access memory (RAM), and a flash memory. All or a part of the memory may be included in the processor.

The controller 120 may include a MAC processor that executes processing in the MAC layer and an upper layer processor that executes processing in an upper layer of the MAC layer. The MAC processor may be referred to as a MAC entity. The upper layer processor executes processing in an upper layer of the MAC layer. The upper layer processor may include a PDCP processor that executes processing in the PDCP layer and an RRC processor that executes processing in the RRCP layer. The PDCP processor may be referred to as a PDCP entity. The RRC processor may be referred to as an RRC entity. Note that, for the upper layer processor, information from the MAC processor may be information from a lower layer.

Note that each of the MAC processor and the upper layer processor (the PDCP processor and/or the RRC processor) may be configured by one processor or may be configured by a plurality of processors. Note that the operations of the MAC processor and the upper layer processor may be the operation of the controller 120. Among the operations of each layer processor, the transmission and/or reception operation may be the operation of the communicator 110 (the transmitter 111 and/or the receiver 112).

In the UE 100 having the above configuration, the receiver 112 receives the cell switch command for triggering the cell switch from the source cell to the target cell from the base station by the MAC CE. The controller 120 performs the cell switch based on the cell switch command. In a case where the cell switch is performed, based on the determination information received from the base station 200, the controller 120 determines whether or not to perform the security key update procedure used for communication in the target cell. As a result, the UE 100 determines whether or not to perform the security key update procedure based on the determination information, so that the security key update procedure can be appropriately performed in the LTM.

In addition, in the UE 100, the receiver 112 receives the RRC message including the LTM configuration information used to provide one or more LTM candidate cell configurations from the base station. In a case where a cell switch command for triggering a cell switch from a source cell to a target cell is received from the base station 200 by the MAC CE, the controller 120 performs the cell switch based on the LTM candidate cell configuration of the candidate cell corresponding to the target cell among the one or more LTM candidate cell configurations. The controller 120 distinguishes and stores each of the one or more LTM candidate cell configurations into a first LTM candidate cell configuration that does not require the security key update processing used for communication in the target cell and a second LTM candidate cell configuration that requires the security key update processing. As a result, the UE 100 can distinguish whether or not the security key update processing is required in a case where the LTM candidate cell configuration is applied based on the location where the LTM candidate cell configuration is stored, for example. As a result, the security key update procedure can be appropriately performed in the LTM.

### (Configuration of Base Station)

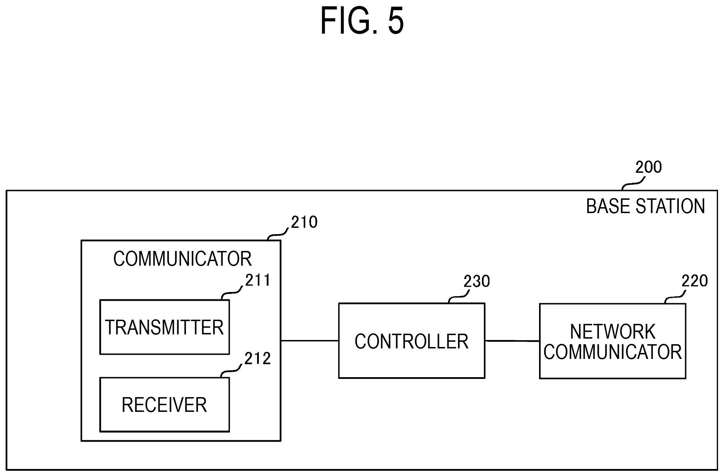

A configuration of the base station 200 according to the embodiment is described with reference to Fig. 5. The base station 200 includes a communicator 210, a network communicator 220, and a controller 230.

For example, the communicator 210 receives a radio signal from the UE 100 and transmits the radio signal to the UE 100. The communicator 210 includes at least one transmitter 211 and at least one receiver 212. The transmitter 211 and the receiver 212 may include an RF circuit. The RF circuit performs analog processing of a signal transmitted and received via the antenna. The RF circuit may include a high frequency filter, an amplifier, a modulator, a low pass filter, and the like.

The network communicator 220 transmits and receives a signal to and from a network. The network communicator 220 receives, for example, a signal from a neighboring base station connected via the Xn interface that is an interface between base stations and transmits the signal to the neighboring base station. Also, the network communicator 220 receives a signal, for example, from the core network apparatus 300 connected via the NG interface and transmits the signal to the core network apparatus 300.

The controller 230 performs various types of control in the base station 200. The controller 230 controls, for example, communication with the UE 100 via the communicator 210. Also, the controller 230 controls, for example, communication with a node (for example, the neighboring base station or the core network apparatus 300) via the network communicator 220. The operation of the base station 200 described above and described below may be an operation controlled by the controller 230. The controller 230 may include at least one processor capable of executing a program and a memory that stores the program. The processor may execute the program and perform the operation of the controller 230. The controller 230 may include a digital signal processor that performs digital processing of a signal transmitted and received via the antenna and the RF circuit. The digital processing includes processing of the protocol stack of the RAN. Note that the memory stores the program to be executed by the processor, parameters related to the program, and data related to the program. All or a part of the memory may be included in the processor.

In the base station 200 configured as described above, the transmitter 211 transmits the cell switch command to the UE 100 by the MAC CE. The transmitter 211 transmits the determination information used for the UE 100 to determine whether or not to perform the security key update procedure used for communication in the target cell at the time of performing the cell switch. As a result, the UE 100 determines whether or not to perform the security key update procedure based on the determination information, so that the security key update procedure can be appropriately performed in the LTM.

In addition, the controller 230 of the base station 200 generates the RRC message including the LTM configuration information used to provide one or more LTM candidate cell configurations. The transmitter 211 transmits the RRC message to the UE 100. The transmitter 211 transmits the cell switch command for triggering the cell switch from the source cell of the base station 200 to the target cell to the UE 100 by the MAC CE. The controller 230 generates the RRC message including the determination information for determining whether or not the security key update processing is required for each of the one or more LTM candidate cell configurations so that the UE 100 distinguishes and stores each of the one or more LTM candidate cell configurations into the first LTM candidate cell configuration that does not require the security key update processing used for communication in the target cell and the second LTM candidate cell configuration that requires the security key update processing. As a result, the UE 100 can appropriately distinguish each of the one or more LTM candidate cell configurations. As a result, the security key update procedure can be appropriately performed in the LTM.

### (First Operation Example)

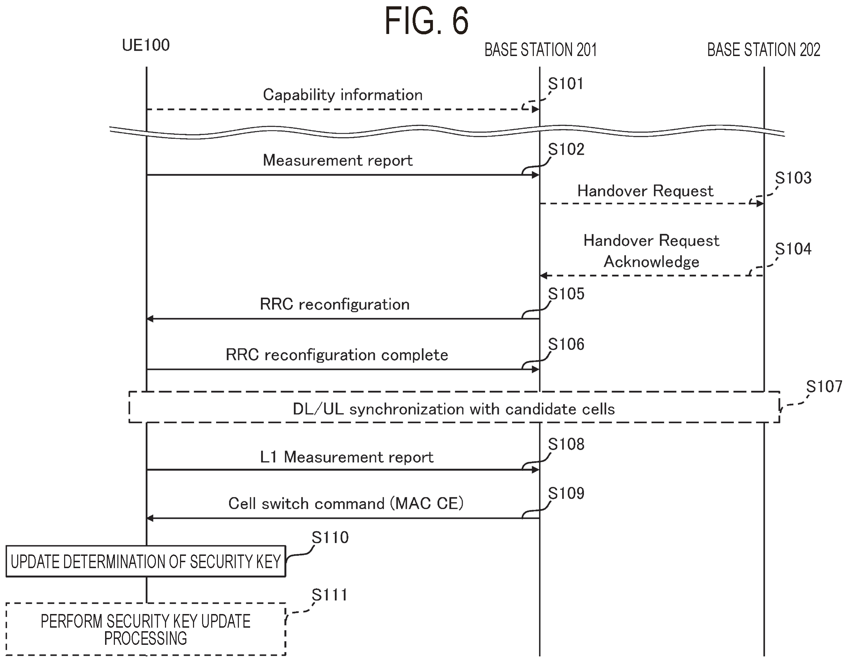

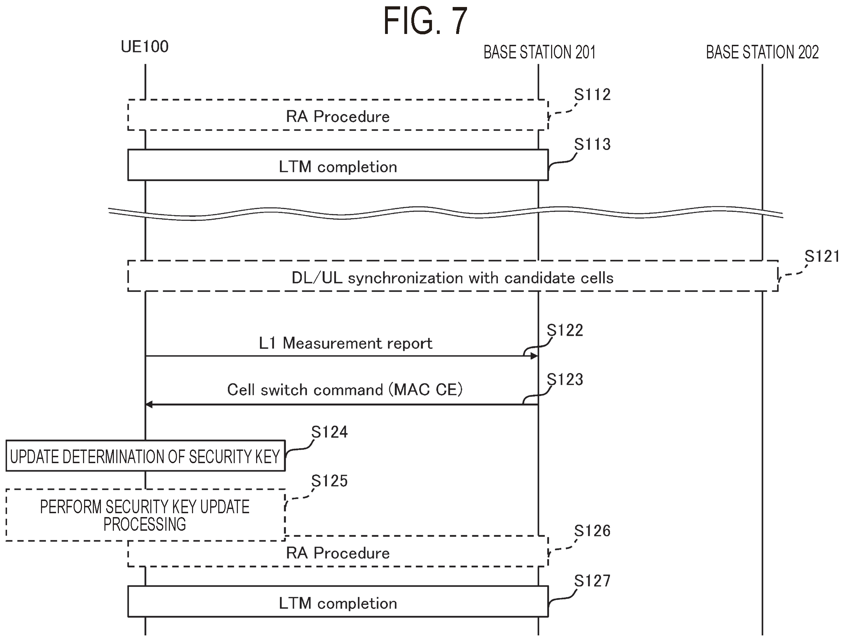

A first operation example will be described with reference to Figs. 6 to 8. An already provided description is omitted in some cases. The mobile communication system 1 of the present operation example includes a base station 201 and a base station 202 as the base station 200. The base station 201 and the base station 202 manage different cells. The base station 202 may be, for example, a neighboring (Neighbor/Neighboring) base station for the base station 201.

The UE 100 is in an RRC connected state with a cell (a source cell) managed by the base station 201. Hereinafter, the UE 100 performs communication with the base station 201 in the source cell until the cell switch to the target cell is performed.

For the UE 100, the communication with the base station 200 may be communication with the cell. Therefore, for the UE 100, the reception of the information/message and the like from the base station 200 may be the reception of the information/message and the like from the cell, and the transmission of the information/message and the like to the base station 200 may be the transmission of the information/message and the like to the cell.

### Step S101:

The transmitter 111 of the UE 100 may transmit capability information to the base station 201. The base station 200 may receive the capability information from the UE 100.

The capability information may be information indicating whether or not the UE 100 supports the cell switch (hereinafter may be referred to as an inter-base station LTM) between different base stations by the LTM.

Further, the capability information may be at least one of information indicating whether or not the UE 100 supports the cell switch performed without receiving an RRC reconfiguration message after executing a first cell switch described later (hereinafter may be referred to as a second cell switch), and information indicating whether or not the UE 100 supports a subsequent LTM.

Here, the subsequent LTM may be any of the following operations.
· (i) Operation in which a cell switch (hereinafter may be referred to as the first cell switch) is performed according to LTM configuration information received from the base station 200 (that is, the source cell) and then a cell switch is performed without RRC reconfiguration
· (ii) Operation in which a cell switch is performed without receiving RRC reconfiguration message after performing the first cell switch
· (iii) Operation in which, after the first cell switch is performed, the cell switch is performed in accordance with the LTM configuration information without discarding the LTM configuration information (that is, the LTM configuration information received from the previous source cell instead of the current source cell)
· (iv) Operation in which a cell switch between L1/L2 mobility candidates is performed without executing RRC reconfiguration
· (v) Operation in which a consecutive cell switch between L1/L2 mobility candidates are performed without executing RRC reconfiguration

Note that the cell switch (that is, a cell switch by LTM) in the present operation example may be referred to as an LTM cell switch. The LTM cell switch may include the first cell switch and the second cell switch.

The first cell switch may be a cell switch according to the LTM configuration information directly received from the source cell. The first cell switch may be referred to as a first LTM (or first LTM cell switch).

The second cell switch may be a cell switch according to the LTM configuration information not directly received from the source cell. Therefore, the second cell switch may be a cell switch that is performed without RRC reconfiguration (without directly receiving an RRC reconfiguration message from the source cell). The second cell switch may be referred to as a subsequent LTM (or second LTM cell switch).

### Step S102:

The transmitter 111 of the UE 100 transmits a measurement report (message) to the base station 201. The receiver 212 of the base station 201 receives the measurement report from the UE 100.

The controller 230 of the base station 201 determines whether or not to use the LTM. For example, the controller 230 may determine whether or not to use the LTM based on the measurement report. In a case where it is determined to use the LTM, the controller 230 initiates the candidate cell preparation.

The controller 230 may choose the candidate cell of the target cell in the LTM as the candidate cell preparation based on the measurement report. For example, the controller 230 may choose a candidate cell from among cells managed by the base station 201. The candidate cell may be referred to as an LTM candidate cell.

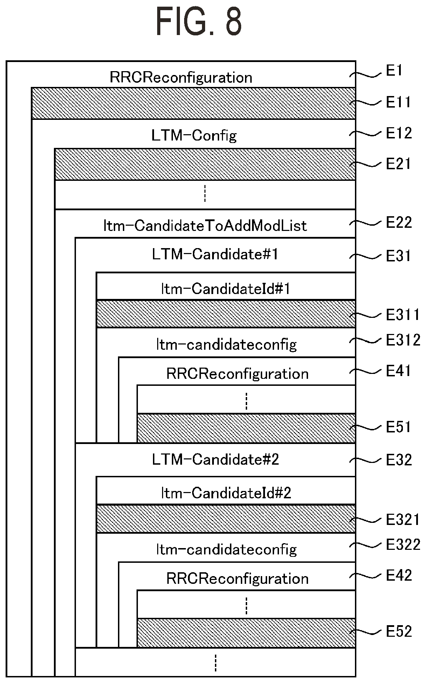

Furthermore, the controller 230 may generate configuration information regarding the LTM (hereinafter, referred to as LTM configuration information). For example, the controller 230 may include the generated LTM configuration information (for example, LTM-Config) in the RRC reconfiguration message (see E1 and E12 in Fig. 8). The controller 230 may instruct the UE 100 to perform the LTM (operation related to the LTM) by including the LTM configuration information in the RRC reconfiguration message. In a case where the LTM configuration information is included in the RRC reconfiguration message, the UE 100 may execute the LTM (operation related to LTM).

The LTM configuration information (for example, LTM-Config) may be information used to provide (one or more) LTM candidate cell configuration(s). The controller 230 may include, in the LTM configuration information (for example, LTM-Config), for example, at least one of a list for releasing a candidate cell (hereinafter may be referred to as an LTM candidate release list (for example, ltm-CandidateToReleaseList)) and a list for adding or modifying a candidate cell (hereinafter may be referred to as an LTM addition/modification list (for example, ltm-CandidateToAddModList)).

The LTM candidate release list may be a list of LTM candidate cell configurations to be deleted. The LTM candidate release list may be configured with an identifier of candidate cell (for example, ltm-CandidateId).

The LTM addition/modification list may be a list configured with the LTM candidate information (for example, LTM-Candidate). The LTM addition/modification list may be a list of LTM candidate cell configurations to be added and/or modified. The LTM candidate information may include, for example, at least one of the following information.
· Identifier of candidate cell (for example, ltm-CandidateId)
· LTM candidate configuration information (for example, ltm-CandidateConfig)
· LTM configuration completion information indicating whether the LTM candidate cell configuration is complete configuration or delta-configuration (for example, ltm-ConfigComplete)
· Configuration information for configuring information to be used for early synchronization (for example, ltm-EarlyUL-SyncConfig)
· Identifier indicating whether or not to perform L2 reset for the LTM candidate cell in the LTM cell switch procedure (for example, ltm-NoResetID)
· List for adding/modifying information to be used for early synchronization (for example, ltm-Candidate-Tci-States-ToAddModList)
· Identifier (for example, ltm-Candidate-Tci-States-ToReleaseList) for canceling (removing) information used for early synchronization

The identifier of the candidate cell may be an identifier of the LTM candidate cell configuration. The LTM candidate cell configuration may be information indicating (or including) the LTM candidate cell configuration (also referred to as the LTM candidate cell configuration information). The LTM candidate cell configuration may include an RRC reconfiguration message used to configure one LTM candidate cell. Therefore, the LTM candidate cell configuration may include RRC (re)configuration (RRC reconfiguration message) configured in the UE 100. The LTM candidate cell configuration may include cell group configuration information (for example, CellGroupConfig) including serving cell configuration information (for example, ServingCellConfig) and the like. The LTM configuration complete information may indicate whether the LTM candidate cell configuration in the LTM candidate cell configuration information is complete configuration.

The LTM candidate cell configuration may be a configuration based on the LTM candidate information (for example, LTM-Candidate) or a configuration indicated by the LTM candidate information. The LTM candidate cell configuration may be referred to as LTM candidate cell configuration information. As described above, the LTM configuration information may include the RRC reconfiguration information applied to the cell after the cell switch. The RRC reconfiguration information may be information indicating RRC reconfiguration or an RRC reconfiguration message.

Note that in the present specification, in a case where an RRC reconfiguration message is simply described, the RRC reconfiguration message may be an RRC reconfiguration message including the LTM configuration information or an RRC reconfiguration message included in the LTM candidate cell configuration. For example, in a case where an RRC reconfiguration message is simply described, the RRC reconfiguration message may be an RRC reconfiguration message (received by the UE 100) transmitted from the base station 200 (in the present operation example, the base station 201), or may be an RRC reconfiguration message included in the LTM candidate cell configuration corresponding to a target configuration identifier indicated from the MAC layer in a case where the LTM is performed. Note that the controller 120 may include a MAC processor that executes processing in the MAC layer and an upper layer processor that executes processing in an upper layer of the MAC layer. The MAC processor may be referred to as a MAC entity. The upper layer processor executes processing in an upper layer of the MAC layer. The upper layer processor may include a PDCP processor that executes processing in the PDCP layer and an RRC processor that executes processing in the RRCP layer. The PDCP processor may be referred to as a PDCP entity. The RRC processor may be referred to as an RRC entity. Note that, for the upper layer processor, information from the MAC processor may be information from a lower layer.

The controller 230 of the base station 201 may determine whether or not to use the subsequent LTM. For example, the controller 230 may determine whether or not to use the subsequent LTM based on the capability information from the UE 100.

In a case where the capability information indicates that the UE 100 executes the subsequent LTM (or the second cell switch) support, the controller 230 may determine to use the subsequent LTM. On the other hand, in a case where the capability information indicates that the UE 100 does not execute the subsequent LTM (or the second cell switch) support, the controller 230 may determine not to use the subsequent LTM. In a case where it is determined to use the subsequent LTM, the controller 230 may initiate the candidate cell preparation. Similarly to the LTM, the controller 230 may start the candidate cell preparation.

The controller 230 may determine whether or not the UE 100 supports the inter-base station LTM based on the capability information. If the capability information indicates that the UE 100 supports the inter-base station LTM, the controller 230 may determine whether or not to allow the UE 100 to execute the LTM cell switch to the cell of another base station 200 (for example, the base station 201) based on the measurement report.

If the capability information indicates that the UE 100 supports the inter-base station LTM, the controller 230 may determine to allow the UE 100 to execute the LTM cell switch to the cell of the other base station 200. On the other hand, if the capability information indicates that the UE 100 does not support the inter-base station LTM, the controller 230 may determine not to allow the UE 100 to execute the LTM cell switch to the cell of the other base station 200. In this case, the controller 230 may omit the processing in step S103.

The controller 230 may execute the following processing in a case where the UE 100 is allowed to execute the LTM cell switch to the cell of the other base station 200 (for example, the base station 201) based on the measurement report.

### Step S103:

The network communicator 220 of the base station 201 transmits, for example, a handover request message for requesting preparation of a resource for handover to the base station 202. The network communicator 220 of the base station 202 receives a handover request message from the base station 201. Note that the message may be a message other than the handover request message. The message may be a message used to request preparation for a cell switch by the LTM and/or the subsequent LTM.

The handover request message may include information requesting a cell switch (an LTM cell switch) to a cell of the base station 202 by the LTM and/or a subsequent LTM. The handover request message may include information for identifying a candidate cell among cells managed by the base station 202.

For example, the controller 230 of the base station 202 may determine whether or not to approve the LTM cell switch based on the handover request message. In a case where the LTM cell switch is accepted, the controller 230 may execute the following processing.

### Step S104:

The network communicator 220 of the base station 202 transmits, to the base station 201, a handover request acknowledge message for notifying the source base station (that is, the base station 201) of the prepared resource at the target. The network communicator 220 of the base station 201 receives the handover request acknowledge message from the base station 202. The message may be a message used for notification of approval of preparation for a cell switch by the LTM and/or the subsequent LTM.

The handover request acknowledge message is information about a cell managed by the base station 202, and may include information to be included in the LTM configuration information. For example, the controller 230 of the base station 202 may include at least a part or all of the LTM candidate cell configuration (LTM candidate cell configuration information) related to the candidate cell of the base station 202 in the message.

In a case where the controller 230 does not approve the LTM cell switch, for example, the controller 230 may transmit, to the base station 201, a handover preparation failure message for notifying the source base station (that is, the base station 201) that handover preparation has failed.

The controller 230 of the base station 201 may include the LTM candidate cell configuration (LTM candidate cell configuration information) related to the candidate cell of the base station 202 in the LTM configuration information. Alternatively, the controller 230 of the base station 201 may generate not only the LTM candidate cell configuration of the base station 201 itself but also the LTM candidate cell configuration of the base station 202. The controller 230 may include the generated LTM candidate cell configuration in the LTM configuration information. The controller 230 generates an RRC message including the LTM configuration information.

### Step S105:

The transmitter 211 of the base station 201 transmits the RRC reconfiguration message including the LTM configuration information to the UE 100. The receiver 112 of the UE 100 receives the RRC reconfiguration message from the base station 201 as the RRC message. The controller 120 of the UE 100 stores the LTM configuration information.

### Step S106:

The transmitter 111 of the UE 100 transmits an RRC reconfiguration completion message to the base station 201. The receiver 212 of the base station 201 receives the RRC reconfiguration completion message from the UE 100.

### Step S107:

Downlink synchronization with each candidate cell may be performed as an operation of early synchronization. The controller 120 of the UE 100 performs downlink synchronization, for example, based on the SSB transmitted from each candidate cell.

In addition, uplink synchronization with each candidate cell may be performed as an operation of early synchronization. For example, the transmitter 211 of the base station 201 may transmit a physical downlink control channel (PDCCH) order (that is, downlink control information (DCI)) for initiating the RA procedure for early synchronization to the UE 100 in each candidate cell configured for the UE 100 by the LTM candidate cell configuration. The receiver 112 of the UE 100 may receive the PDCCH order from the base station 201. Note that the PDCCH order in the early synchronization may be a PDCCH order (PDCCH ordered-RACH for TA Acquisition without RAR) used for acquiring the TA value without the RA response. The controller 120 of the UE 100 may initiate the RA procedure based on the PDCCH order.

The transmitter 111 of the UE 100 transmits the RA preamble (message 1) to the base station 201 on a physical random access channel (PRACH) in each candidate cell. The receiver 212 of the base station 201 receives the RA preamble from the UE 100 in each candidate cell. The controller 230 of the base station 201 calculates a timing advance (TA) value based on the RA preamble from the UE 100. The controller 230 may perform control to omit transmission of an RA response (that is, message 2) that is a response to the RA preamble.

Note that the controller 230 may include information instructing execution of a RACH-less LTM in the RA response (that is, the message 2). The information may include information instructing the UE100 to skip the RA procedure of the LTM cell switch. The information may be information instructing execution of the RACH-less LTM in a case where the UE 100 should apply the same TA as that of the source cell (the base station 200 that manages the source cell).

### Step S108:

The transmitter 111 of the UE 100 executes the L1 measurement on each candidate cell configured by the LTM configuration information and then transmits the L1 measurement report to the base station 201. The receiver 212 of the base station 201 receives the L1 measurement report from the UE 100. The L1 measurement report is a measurement report of the lower layer based on the L1 measurement. The L1 measurement report is transmitted in a lower layer of the RRC layer. Note that the measurement report in step S110 is transmitted in the RRC layer.

The controller 230 of the base station 201 determines a target cell in the LTM (that is, the LTM target cell) based on the L1 measurement report. In addition, in the LTM execution, the controller 230 may determine whether to cause the UE 100 to perform a RACH-less LTM in which the UE 100 performs the uplink transmission without performing the RA procedure between the UE 100 and the base station 201 or to cause the UE 100 to execute a RACH-based LTM (RACH-base LTM) in which the RA procedure is performed between the UE 100 and the base station 201.

The controller 230 generates a MAC CE for transmitting a cell switch command. The MAC CE may be referred to as, for example, an LTM cell switch command MAC CE. The MAC CE may be referred to as a cell switch command (that is, may be a cell switch command). Hereinafter, the LTM cell switch command MAC CE may be appropriately referred to as a cell switch command. The cell switch command may include, for example, at least one piece of the following information (that is, field).
· Target configuration identifier (Target Configuration ID) indicating the index of the candidate target configuration to be applied to the LTM cell switch
· Timing advance command indicating whether TA for LTM target cell is valid
· Identifier of TCI state (TCI state ID) indicating and activating a transmission configuration indication (TCI) state for LTM target cell
· Identifier of uplink TCI state (UL TCI state ID) indicating and activating uplink TCI state for LTM target cell
· Identifier of downlink bandwidth part (DL BWP ID) activated in LTM target cell
· Identifier of uplink bandwidth part (UL BWP ID) activated in LTM target cell
· Information related to contention free random access (CFRA) resource

The target configuration identifier may be an identifier of a candidate cell to be a target cell that is a cell after the switching among the identifiers of the candidate cells described above.

The timing advance command (field) may indicate whether TA (TA value) is valid for the target cell (for example, SpCell) corresponding to the target configuration (that is, the LTM candidate cell configuration) indicated by the target configuration identifier (field). In a case where a predetermined value (for example, FFF) is set as the value of the field, the field may indicate that effective timing adjustment cannot be used for the primary timing advance group (PTAG) of the LTM target cell. In this case, the UE 100 needs to perform the RA procedure to the LTM target cell. That is, the UE 100 executes the RACH-based LTM. Meanwhile, in a case where a value other than the predetermined value (for example, FFF) is set as the value of the field, the field indicates an index value (that is, the TA value) used to control the amount of timing adjustment to be applied by the MAC entity of the UE 100. That is, the timing advance command (field) indicates that the RA procedure of the LTM cell switch can be skipped. In this case, the UE 100 executes the RACH-less LTM. Here, the predetermined value is defined in advance by a specification or the like and may be a value known between the base station 201 and the UE 100.

The controller 120 of the UE 100 may execute the RACH-less LTM in a case where the same TA as that of the source cell (the base station that manages the source cell) should be applied (or is applied). The controller 120 may execute the RACH-less LTM in a case where the timing advance command (field) is the same as TA applied in the current source cell. Alternatively, the cell switch command may include information (field) indicating (instructing) that the same TA as that of the source cell (base station that manages the source cell) should be applied (or is applied), separately from the timing advance command (field). The information (field) related to the CFRA resource may indicate a resource used in a case where the UE 100 executes CFRA (for example, a radio resource, a preamble index indicating which RA preamble is used, or the like).

### Step S109:

The transmitter 211 of the base station 201 transmits the cell switch command to the UE 100 by the MAC CE. The receiver 112 of the UE 100 receives the cell switch command from the base station 201 by the MAC CE.

The controller 120 of the UE 100 switches the configuration of the target cell based on the identifier (that is, the target configuration identifier) of the candidate cell included in the cell switch command (MAC CE). For example, the controller 120 applies the LTM candidate cell configuration associated with the identifier of the candidate cell that is the same as the target configuration identifier included in the cell switch command (MAC CE). For example, the MAC layer in the UE 100 may notify the RRC layer of information (and a target configuration identifier) notifying that the cell switch command (MAC CE) is received. In addition, in a case where information (and a target configuration identifier) notifying that the cell switch command is received is provided from the MAC layer, the RRC layer in the UE 100 may apply the candidate cell configuration information associated with the identifier of the same candidate cell as the target configuration identifier. That is, (the RRC layer of) the UE 100 may apply the LTM candidate cell configuration based on the reception of the information indicating that the cell switch procedure is triggered by the MAC layer (the information indicating that the cell switch procedure is triggered from the MAC layer). Here, the LTM candidate cell configuration may be an LTM candidate cell configuration corresponding to the target configuration identifier indicated from the MAC layer.

The controller 120 determines whether to execute the RACH-based LTM or to execute the RACH-less LTM based on the value included in the timing advance command. In a case where a predetermined value (for example, FFF) is set in the timing advance command, the controller 120 determines to execute the RACH-based LTM. Meanwhile, in a case where a value other than a predetermined value (for example, FFF) is set in the timing advance command, the controller 120 determines to execute the RACH-less LTM. In a case where the same TA as that of the current source cell is applied (should be applied), the controller 120 may determine to execute the RACH-less LTM. The controller 120 may determine whether or not the same TA as that of the current source cell is applied (should be applied) based on the information received from the base station 201 (for example, the information included in the RA response and/or the information included in the cell switch command).

The controller 120 of the UE 100 performs the first cell switch according to the LTM configuration information in a case where the cell switch command is received from the base station 200 by the MAC CE. In the present operation example, a description will be given assuming that a cell switch to a cell managed by the base station 201 is performed.

### Step S110:

The controller 120 of the UE 100 executes security key update determination. Specifically, based on the determination information received from the base station 201 (hereinafter, may be referred to as the update determination information), in a case where the cell switch is performed, the controller 120 determines whether or not to perform the security key update procedure used for communication in the target cell. Details of the security key update determination will be described later.

In a case where it is determined to perform the security key update procedure, the controller 120 performs the security key update procedure. The controller 120 executes processing of step S111. On the other hand, in a case where it is determined not to perform the security key update procedure, the controller 120 omits (or skips) the security key update procedure.

### Step S111:

The controller 120 performs the security key update procedure. For example, the controller 120 performs the security key update procedure based on the information for the security key update procedure included in the RRC reconfiguration information (RRC reconfiguration message) included in the LTM candidate configuration information (for example, ltm-CandidateConfig) of the candidate cell corresponding to the target cell.

The controller 120 derives or updates the security key based on the information for the security key update procedure (hereinafter, may be referred to as key update information). The key update information may include, for example, at least one of the following information.
· Master key update information (for example, "MasterKeyUpdate")
· Security key
· Identifier of the algorithm selected for a data radio bearer (DRB) and/or a signalling radio bearer (SRB) requested for the UE 100.
· UP integrity protection and encryption indication
· Counter information (for example, "sk-Counter" and "sk-counter-list")

The security key may be referred to as, for example, "KeNB" or "KgNB". The counter information indicates a counter value used to derive the security key. The counter information may be a parameter indicating that a new security key is required.

The controller 120 derives or updates, based on the security key, a key used for communication protection between the UE 100 and a base station (target base station) that manages the target cell.

The controller 120 may derive or update the security key based on the counter value indicated by the counter information. In addition, the controller 120 may derive or update, for example, a necessary RRC key and a necessary UP key based on the derived security key.

Note that the RRC key is a key for RRC signaling. The RRC key is a key derived by the UE 100 and the base station 200 from the security key. The RRC key may have a key (KRRCint) used only for protecting the RRC signaling together with a specific integrity algorithm, and a key (KRRCenc) used only for protecting the RRC signaling together with a specific encryption algorithm.

The UP key is a key for uplink (UP) traffic. The UP key is a key derived by the UE 100 and the base station 200 from the security key. The UP key may have a key (KRRCint) used only for protecting the UP traffic between the UE 100 and the base station 200 together with a specific integrity algorithm (particular integrity algorithm), and a key (KRRCenc) used only for protecting the UP traffic together with a specific encryption algorithm (particular encryption algorithm).

The controller 120 of the UE 100 may verify the integrity based on the key update information. In addition, the controller 120 may activate RRC and UP protection according to the received key update information for each of the associated SRB and/or DRB.

Note that the security key update procedure may be, for example, an access stratum (AS) security key update procedure.

### Step S112:

In a case where it is determined to execute the RACH based LTM, the controller 120 of the UE 100 performs a random access (RA) procedure.

### Step S113:

In a case where the UE 100 executes the RACH based LTM, the controller 120 of the UE 100 may consider that the LTM execution procedure has been successfully executed (that is, the LTM completion has been executed) in a case where the random access (RA procedure) has been successfully completed. The controller 230 of the base station 201 may determine that the LTM execution procedure has been successfully executed (that is, the LTM completion has been executed) based on the reception of the preamble in the RA procedure (contention-free RA (CFRA)) or the reception of the message 3 or the message A in the RA procedure (contention-based RA (CBRA)).

On the other hand, in a case where the UE 100 executes the RACH-less LTM, the transmitter 111 of the UE 100 transmits uplink transmission (for example, the first uplink data) to the base station 201. The controller 120 of the UE 100 may consider that the LTM execution procedure has been successfully executed (that is, the LTM completion has been executed) in a case where it is determined that the network has successfully received the uplink transmission.

The receiver 112 of the base station 201 receives the uplink transmission from the UE 100. The controller 230 of the base station 201 may recognize that the UE 100 has switched the serving cell to the target cell based on the reception of the uplink transmission (for example, the first uplink data) in the target cell. As a result, the controller 230 may determine that the LTM execution procedure has been normally executed (that is, the LTM completion has been executed).

Thereafter, the controller 120 of the UE 100 may determine whether or not the second cell switch has been permitted. The controller 120 may determine whether or not the execution of the subsequent LTM is permitted (or whether the subsequent LTM is possible (to be executed)).

In a case where the second cell switch is permitted, the controller 120 may perform the processing of step S121. On the other hand, in a case where the second cell switch is not permitted, the controller 120 may end the processing in the present operation example. In this case, the controller 120 may release the LTM configuration information received from the source cell before the cell switch.

The controller 120 may execute communication with the target cell by applying the RRC reconfiguration information (RRC reconfiguration message) included in the LTM candidate cell configuration of the candidate cell corresponding to the target cell based on the execution of the cell switch.

The controller 120 of the UE 100 may invalidate the LTM candidate cell configuration of the candidate cell corresponding to the target cell based on the execution of the cell switch to the target cell.

### Steps S121 and S122:

Steps S121 and S122 are corresponding to steps S107 and S108, respectively.

In a case where the controller 120 invalidates the LTM candidate cell configuration of the candidate cell corresponding to the target cell, the candidate cell associated with the LTM candidate cell configuration (that is, the current serving cell) is not an object of the target cell. Therefore, the controller 120 does not subject the current serving cell to the L1 measurement report. The controller 120 may perform control so that the L1 measurement report for the cell associated with the invalidated LTM candidate cell configuration is not triggered.

In addition, for example, the controller 120 may omit transmission of the L1 measurement report for the source cell to the source cell. The controller 120 may control the L1 measurement report not to be triggered for cells associated with the LTM candidate cell configuration including the identifier of the source cell (for example, a cell ID).

### Steps S121 to S127:

Steps S121 to S127 correspond to steps S107 to S113.

Similarly to step S110, the UE 100 may determine whether or not to perform the security key update procedure in the current serving cell (that is, the cell after performing the second cell switch).

In addition, the controller 120 of the UE 100 may validate the invalidated LTM candidate cell configuration based on the execution of the cell switch after the target cell is set as the source cell.

Note that the UE 100 has not directly received the RRC reconfiguration message from the current serving cell (that is, the target cell before the cell switch) after the first cell switch. Therefore, the cell switch based on the cell switch command in step S123 is the second cell switch.

As described above, the transmitter 211 of the base station 200 transmits the cell switch command to the UE 100 by the MAC CE. The transmitter 211 transmits the update determination information used for the UE 100 to determine whether or not to perform the security key update procedure used for communication in the target cell at the time of performing the cell switch. In addition, the receiver 112 of the UE 100 receives the cell switch command for triggering the cell switch from the source cell to the target cell from the base station by the MAC CE. The controller 120 performs the cell switch based on the cell switch command. In a case where the cell switch is performed, based on the update determination information received from the base station 200, the controller 120 determines whether or not to perform the security key update procedure used for communication in the target cell. As a result, the UE 100 determines whether or not to perform the security key update procedure based on the update determination information, so that the security key update procedure can be appropriately performed in the LTM.

In addition, the controller 120 may omit transmission of the L1 measurement report for the source cell to the source cell. As a result, it is possible to avoid the UE 100 executing the unnecessary L1 measurement report.

In addition, the controller 120 of the UE 100 may invalidate the LTM candidate cell configuration of the candidate cell corresponding to the target cell based on the execution of the cell switch to the target cell. The controller 120 may validate the invalidated LTM candidate cell configuration based on the execution of the cell switch after the target cell is set as the source cell. As a result, since the LTM candidate cell configuration is invalidated for the current serving cell of the UE 100, the L1 measurement report can be omitted. As a result, it is possible to avoid the UE 100 executing the unnecessary L1 measurement report. On the other hand, after performing the cell switch from the serving cell (source cell), the UE 100 is subjected to the L1 measurement report since the LTM candidate cell configuration for the cell is validated. Therefore, the UE 100 can perform the LTM cell switch on the same cell.

### (Determination Operation Related to Security Key Update Procedure)

Next, a determination operation example of the UE 100 will be described with reference to Figs. 8 to 12. In a case where the cell switch is performed, using at least one of the following methods, the controller 120 of the UE 100 determines whether or not to perform the security key update procedure used for communication in the target cell.

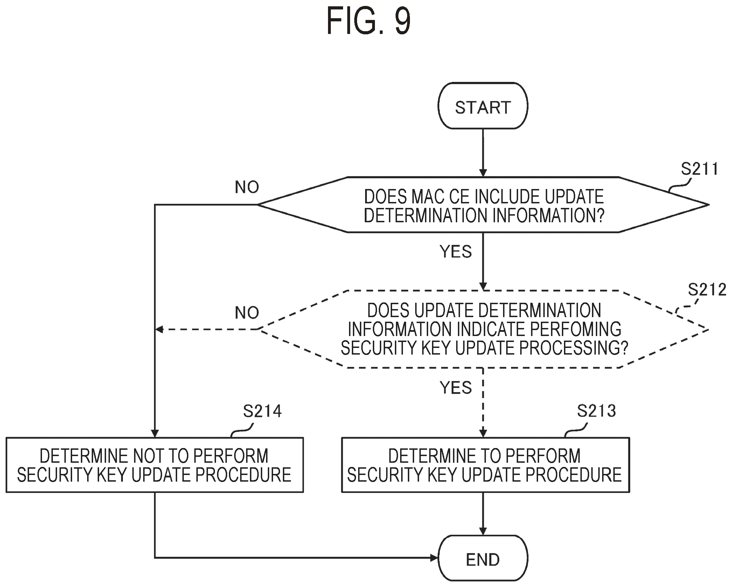

In the first method, the controller 120 makes a determination based on the update determination information included in the MAC CE (see Fig. 9).

### Step S211:

The controller 120 determines whether or not the MAC CE includes the update determination information. Here, the MAC CE is a MAC CE (an LTM cell switch command MAC CE) used to transmit a cell switch command.

In a case where the MAC CE includes update determination information, the controller 120 may perform the processing of step S212. In a case where the MAC CE does not include update determination information, the controller 120 may execute the processing of step S214.

The update determination information may indicate, for example, whether or not to perform the security key update procedure. The update determination information may indicate whether or not the security key needs to be changed. Here, the controller 120 may execute the processing in step S212.

Alternatively, the update determination information may indicate that the security key update procedure is performed in a case where the update determination information is included in the LTM cell switch command MAC CE. The update determination information may indicate that the security key update procedure is not performed in a case where the update determination information is not included in the LTM cell switch command MAC CE. Here, the controller 120 may skip the processing of Step S212.

### Step S212:

The controller 120 determines whether or not the update determination information indicates performing the security key update procedure. In a case where the update determination information indicates performing the security key update procedure (or indicates that it is necessary to switch the security key), the controller 120 performs the processing of step S213. On the other hand, in a case where the update determination information indicates not performing the security key update procedure (or indicates that it is not necessary to switch the security key), the controller 120 executes the processing of step S214.

### Step S213:

The controller 120 determines to perform the security key update procedure. In this case, the controller 120 may perform the security key update procedure based on the information for the security key update procedure (key update information) included in the LTM candidate cell configuration of the candidate cell corresponding to the target cell.

### Step S214:

The controller 120 determines not to perform the security key update procedure. In this case, the controller 120 may omit the security key update procedure. The controller 120 may omit the security key update procedure regardless of whether or not the key update information is included in the LTM candidate cell configuration of the candidate cell corresponding to the target cell. Therefore, the controller 120 may omit the security key update procedure even if the key update information is included in the LTM candidate cell configuration of the candidate cell corresponding to the target cell.

Note that this determination may be executed by the MAC processor of the controller 120. The MAC processor may determine whether or not the LTM cell switch command MAC CE includes the update determination information.

In a case where the processing of step S213 is executed, the MAC processor may notify an upper layer (of the MAC layer) of the identifier of the target cell (for example, the target configuration identifier) and the content of the update determination information included in the LTM cell switch command MAC CE. The MAC processor may notify the upper layer of the target configuration identifier and the update determination information. The MAC processor may notify the upper layer of an indication indicating performing the security key update procedure instead of (the content of) the update determination information.

In this case, the RRC processor may be notified of the target configuration identifier and (the contents of) the update determination information from the lower layer (of the RRC layer). The RRC processor may perform the security key update procedure based on the notification.

On the other hand, in a case where the processing of step S214 is executed, the MAC processor may notify the upper layer of the target configuration identifier and does not necessarily need to notify the upper layer of (the content of) the update determination information.

In this case, the RRC processor may be notified of the target configuration identifier and does not necessarily need to be notified of (the contents of) the update determination information from the lower layer (of the RRC layer). The RRC processor may omit the security key update procedure based on the notification. In a case where (the content of) the update determination information or the indication is not notified, the RRC processor may omit the security key update procedure.

Alternatively, this determination may be executed by the RRC processor of the controller 120. In a case where the LTM cell switch command MAC CE includes the identifier of the target cell and the update determination information, the MAC processor may notify the upper layer of the identifier of the target cell and (the content of) the update determination information. In a case where the LTM cell switch command MAC CE includes the update determination information, the MAC processor does not notify the upper layer of (the content of) the update determination information. In a case where (the content of) the update determination information or the indication is not notified, the RRC processor may determine that the LTM cell switch command MAC CE does not include the update determination information and execute the determination according to the present determination processing.

As described above, the update determination information may be included in the MAC CE including the cell switch command. As a result, the network 10 can instruct the UE 100 whether or not to perform the security key update procedure in a case where the execution of the cell switch is instructing. The network 10 can flexibly control the performance the security key update procedure.

Further, the controller 120 of the UE 100 may determine whether or not to perform the security key update procedure based on whether or not the determination information is included in the MAC CE including the cell switch command. As a result, it is not necessary to include the determination information under a predetermined condition (for example, a condition under which the UE 100 is not allowed to perform the security key update procedure), so that the amount of information included in the MAC CE can be reduced.

In addition, the controller 120 of the UE 100 may include a MAC processor that executes processing in the MAC layer. In a case where the MAC CE including the cell switch command includes the identifier of the target cell and the determination information, the MAC processor may notify an upper layer of the MAC layer of the identifier of the target cell and the content of the determination information. As a result, in the upper layer, determination can be made in the upper layer (for example, the RRC layer) that performs the security key update procedure based on the identifier of the target cell and the content of the determination information. In addition, even in a case where the determination information needs to be used in the upper layer (for example, the RRC layer), the determination information can be used.

In addition, the receiver 112 of the UE 100 may receive the RRC message including the LTM configuration information from the base station 200. In a case where it is determined not to perform the security key update procedure based on the update determination information, the controller 120 may omit the security key update procedure even if the information for the update procedure is included in the LTM candidate cell configuration of the candidate cell corresponding to the target cell. As a result, the network 10 can flexibly control the performance of the security key update procedure.

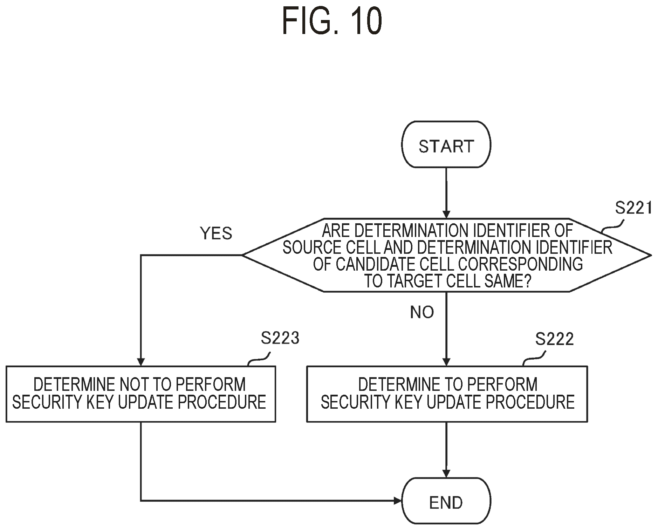

In the second method, the controller 120 makes a determination based on a determination identifier (see Fig. 10).

The determination identifier may be an identifier for identifying a management source of the cell. The determination identifier may indicate, for example, the base station 200 to which the (candidate) cell belongs. The determination identifier may indicate, for example, a central unit (CU) of the base station 200 to which the (candidate) cell belongs. The determination identifier may be referred to as, for example, a cell set ID (cell-set-ID).

For example, the determination identifier may be the same value for cells of the same base station 200. The determination identifier may be a different value for cells of different base stations 200. In addition, for example, the determination identifier may be the same value for cells of the base station 200 having the same central unit (CU). For example, the determination identifier may be the same value for cells of the base station 200 having the same CU. The determination identifier may be a different value for cells of the base station 200 having different CUs.

For example, the determination identifier may be included in the RRC reconfiguration message in step S105. For example, as illustrated in Fig. 8, in the UE 100, the RRC reconfiguration message received from the serving cell (source cell) includes the RRC reconfiguration information (for example, RRCReconfiguration) (see field E1 in Fig. 8). The RRC reconfiguration information includes LTM configuration information (for example, LTM-Config) applied in the serving cell (source cell) (see field E12 in Fig. 8). The LTM configuration information corresponds to the LTM configuration information described in step S102.

The LTM configuration information includes the LTM addition/modification list (for example, ltm-CandidateToAddModList) (see field E22 in Fig. 8). The LTM addition/modification list is a list of a plurality of pieces of LTM candidate information (for example, the first LTM candidate information (for example, LTM-Candidate#1), the second LTM candidate information (for example, LTM-Candidate#2),...) (see fields E31 and E32 in Fig. 8).

The first LTM candidate information (see the field E31 in Fig. 8) includes an identifier of the first candidate cell (for example, ltm-CandidateId#1) and a first LTM candidate configuration (for example, ltm-candidateconfig). The first LTM candidate configuration (see field E312 in Fig. 8) includes the RRC reconfiguration information (for example, RRCReconfiguration) (see field E41 in Fig. 8). The RRC reconfiguration information may be an RRC reconfiguration message. Similarly, the second LTM candidate information E32 includes an identifier of the second candidate cell (for example, ltm-CandidateId#2) and second LTM candidate configurations. Each of the second LTM candidate configurations (see field E322 in Fig. 8) includes the RRC reconfiguration information (for example, RRCReconfiguration) (see field E42 in Fig. 8).

The determination identifier may have a determination identifier of the source cell (hereinafter, may be referred to as a source determination identifier) and a determination identifier of the candidate cell (hereinafter, may be referred to as a candidate determination identifier).

The source determination identifier may be included, for example, in a field (for example, field E11 in Fig. 8) different from the LTM configuration information (field E12). Furthermore, the source determination identifier may be included in a field that is in the LTM configuration information (field E12) and is different from the field in the LTM addition/modification list (for example, field E21 in Fig. 8).

The candidate determination identifier may be included in each of one or more LTM candidate cell configurations. Further, the candidate determination identifier may be included, for example, in a field (for example, field E311) that is in the LTM candidate cell configuration (for example, the field E31) and is different from the field in the LTM candidate configuration information (for example, the field E312). In addition, the candidate determination identifier may be included, for example, in a field (for example, field E51) in RRC reconfiguration (for example, the field E41) applied in a case where the cell switch is performed.

### Step S221:

The controller 120 determines whether or not a determination identifier of the source cell (hereinafter, may be referred to as a source determination identifier) and a determination identifier of the candidate cell corresponding to the target cell (hereinafter, may be referred to as a target determination identifier) are the same. In a case where the source determination identifier and the target determination identifier are the same, the controller 120 executes the processing of step S223. On the other hand, in a case where the source determination identifier and the target determination identifier are different, the controller 120 executes the processing of step S222.

In a case where the target determination identifier is included in both the first field (for example, the field E311) and the second field (for example, the field E51) in the LTM candidate cell configuration (for example, the field E31), for example, the controller 120 may refer to one of the following target determination identifiers. That is, the controller 120 may determine whether or not the referred target determination identifier is the same as the source determination identifier.

The controller 120 may refer to the target determination identifier in the first field. Note that, in a case where the reception processing of the RRC reconfiguration message (RRCReconfiguration) is executed, the controller 120 may refer to a determination identifier (for example, a cell set ID) included in a location (for example, a variable (UE-LTM-Candidate-r18)) where the contents of the LTM configuration information are stored.

In addition, the controller 120 may refer to the target determination identifier in the second field. In this case, the controller 120 may perform the RRC reconfiguration processing (reception processing) applied at the time of performing the cell switch by using the referred target determination identifier.

Additionally, the first field may be a field that is a field (for example, the field E311) that is in the LTM candidate cell configuration (for example, the field E31) and is different from the field in the LTM candidate configuration information (for example, the field E312). The second field is a field (for example, the field E51) in the RRC reconfiguration (for example, the field E41) applied in a case where the cell switch is performed.

As described above, since the reference destination of the target determination identifier is defined, the controller 120 can appropriately execute processing even in a case where the LTM candidate cell configuration in which the target determination identifier is included in both the first field and the second field and the LTM candidate cell configuration in which the target determination identifier is included only in one of the first field and the second field are mixed.

### Step S222:

Step S222 is similar to step S213.

### Step S223:

Step S223 is similar to step S214.

After performing the cell switch, the controller 120 may store the determination identifier of the candidate cell corresponding to the target cell as the determination identifier of the source cell. As a result, even in a case where the UE 100 executes the cell switch by the subsequent LTM, it is possible to appropriately perform the determination.

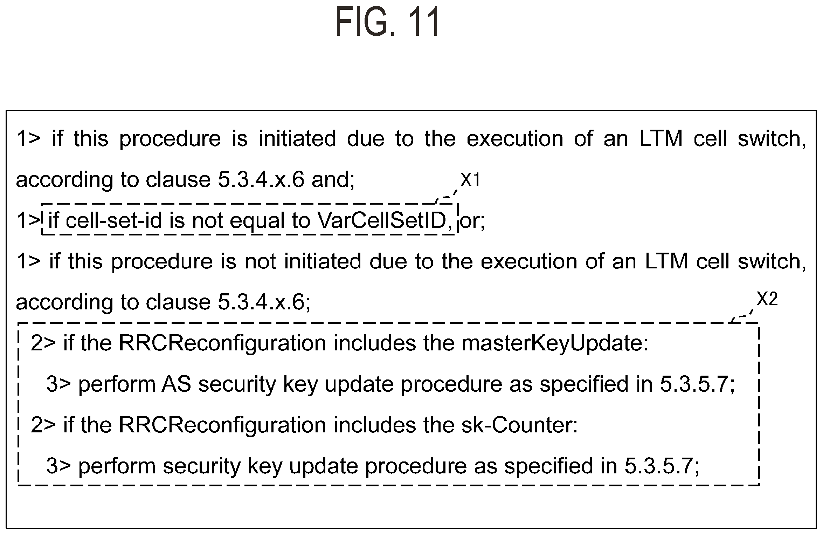

As illustrated in Fig. 11, in a case where the target determination identifier (for example, cell-set-id) is not the same as the source determination identifier (for example, VarCellSetID) (see X1 in Fig. 11), the controller 120 may perform the security key update procedure. In a case where the RRC reconfiguration message includes the key update information (for example, masterKeyUpdate and/or sk-Counter), the controller 120 may perform the security key update procedure (AS security key update procedure and/or security key update procedure) (see X2 in Fig. 11).

As described above, the controller 120 may determine not to perform the security key update procedure in a case where the determination identifier of the source cell is the same as the determination identifier of the candidate cell corresponding to the target cell. The controller 120 may determine to perform the security key update procedure in a case where the determination identifier of the source cell is different from the determination identifier of the candidate cell corresponding to the target cell. Accordingly, in a case where the source cell and the target cell are the same management source, the UE 100 can omit the performance of the security key update procedure. As a result, the performance of an unnecessary security key update procedure can be omitted, and the processing of the UE 100 can be reduced. On the other hand, in a case where the source cell and the target cell are different management sources, the UE 100 can perform the security key update procedure. The UE 100 can appropriately perform the security key update procedure in the LTM.

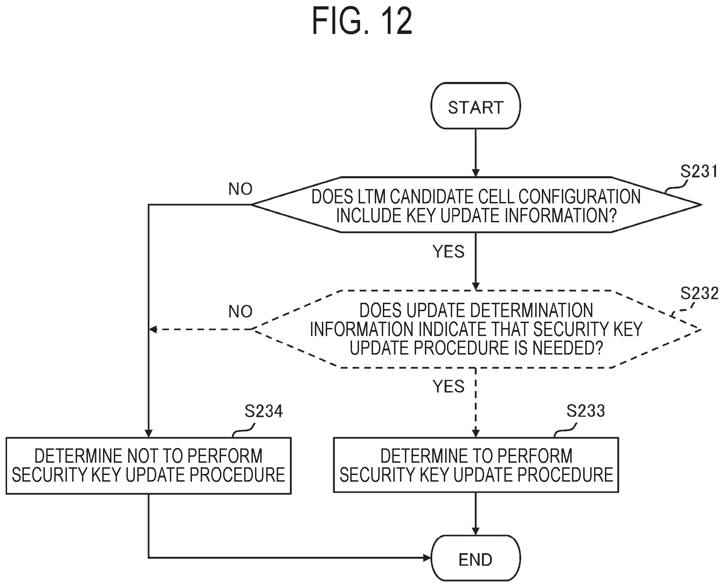

In the third method, the controller 120 makes a determination based on a key update information (see Fig. 12).

### Step S231:

The controller 120 determines whether or not the LTM candidate cell configuration of the candidate cell corresponding to the target cell includes the key update information. For example, in a case where the LTM candidate cell configuration includes the key update information, the controller 120 may execute the processing of step S233. In a case where the LTM candidate cell configuration includes the key update information and the update determination information (associated with the target cell) has been received, the controller 120 may execute the processing of step S232. In a case where the LTM candidate cell configuration includes the key update information and the update determination information (associated with the target cell) has not been received, the controller 120 may execute the processing of step S233. In a case where the LTM candidate cell configuration does not include the key update information, the controller 120 may execute the processing of step S234.

Note that the controller 230 of the base station 200 may include the key update information in the LTM candidate cell configuration of the candidate cell that requires the security key update procedure. The LTM candidate cell configuration of the candidate cell that does not require the security key update procedure may avoid including the key update information.

For example, in a case where a cell managed by another base station 200 is set as a candidate cell, the controller 230 of the base station 200 may include the key update information in all the LTM candidate cell configurations of the candidate cell.

Note that, in a case where a cell managed by another base station 200 is set as a candidate cell, the controller 230 of the base station 200 does not necessarily include the key update information even in the LTM candidate cell configuration of the candidate cell. In this case, in a case where the UE 100 performs the cell switch to the candidate cell, the controller 230 may transmit update determination information to the UE 100 so that it can be determined that the security key needs to be switched.

### Step S232:

Step S232 is similar to step S212. In a case where the update determination information indicates performing the security key update procedure (or indicates that it is necessary to switch the security key), the controller 120 executes the processing of step S233. On the other hand, in a case where the update determination information indicates not performing the security key update procedure (or indicates that it is not necessary to switch the security key), the controller 120 executes the processing of step S234.

### Step S233:

Step S233 is similar to step S213.

### Step S234:

Step S234 is similar to step S214.

### (Second Operation Example)

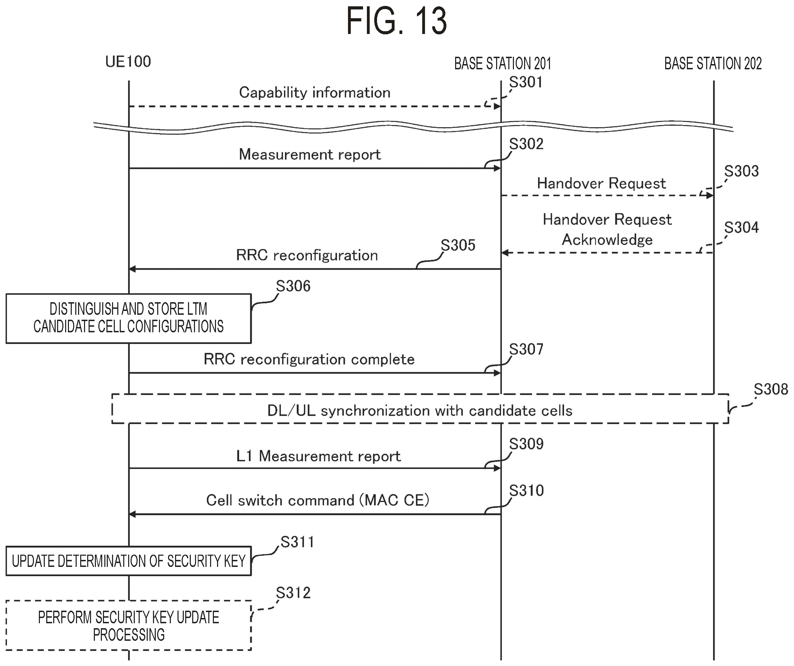

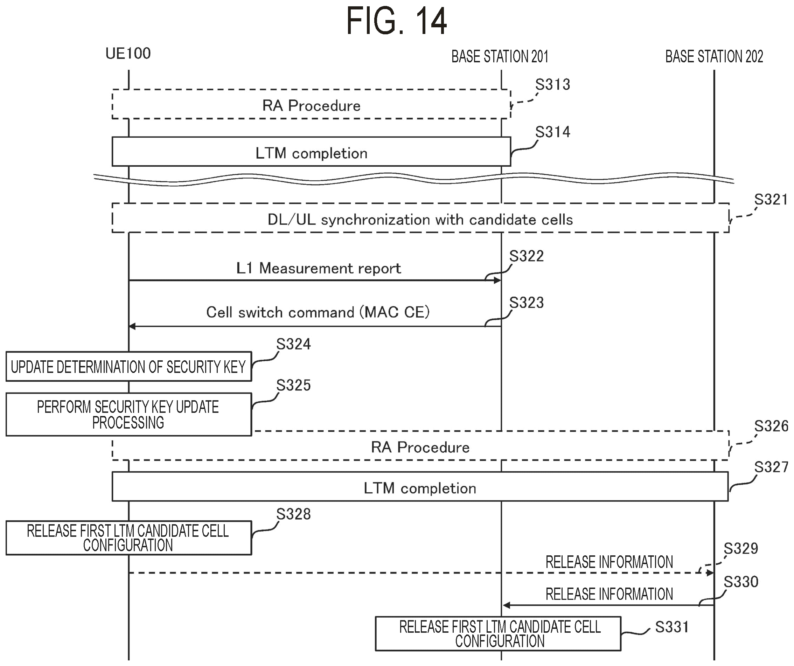

A second operation example will be described with reference to Figs. 13 to 16. An already provided description is omitted in some cases. In the present operation example, a case where the UE 100 distinguishes and stores LTM candidate cell configurations will be described.

### Steps S301 to S305:

Steps S301 to S305 are similar to steps S101 to S105.

The controller 120 of the base station 201 may include, for example, as described in step S231 above, the key update information in the LTM candidate cell configuration of the candidate cell that requires the security key update procedure. The LTM candidate cell configuration of the candidate cell that does not require the security key update procedure may avoid including the key update information. For example, in a case where a cell managed by another base station 200 is set as a candidate cell, the controller 230 of the base station 201 may include the key update information in all the LTM candidate cell configurations of the candidate cell.

In addition, the controller 230 of the base station 201 may include the key update information for all the LTM candidate cell configurations. In this case, the controller 230 may indicate to the UE 100 whether or not it is necessary to perform the security key update procedure based on the determination information.

### Step S306:

The controller 120 of the UE 100 distinguishes and stores LTM candidate cell configurations. The controller 120 may distinguish and store each of the one or more LTM candidate cell configurations into a first LTM candidate cell configuration that does not require performing the security key update procedure used for communication in the target cell and a second LTM candidate cell configuration that requires performing the security key update procedure. The controller 120 may distinguish and store the LTM candidate cell configurations in response to reception of the RRC reconfiguration message.

The controller 120 may distinguish the LTM candidate cell configurations based on determination information for determining whether or not the security key update procedure needs to be performed for each of one or more LTM candidate cell configurations. Details of the method of distinguishing by the controller 120 will be described later.

For example, the controller 120 may store the first LTM candidate cell configuration in a first storage area. For example, the controller 120 may store the first LTM candidate cell configuration as a first variable (for example, VarLTMCandidateNoSec). On the other hand, for example, the controller 120 may store the second LTM candidate cell configuration in a second storage area. For example, the controller 120 may store the second LTM candidate cell configuration as a second variable (for example, VarLTMCandidateWithSec).

### Steps S307 to S310:

Steps S307 to S310 are similar to steps S106 to S109.

### Step S311:

In a case where the cell switch is performed based on the first LTM candidate cell configuration, the controller 120 may determine to omit performing the security key update procedure. On the other hand, in a case where the cell switch is performed based on the second LTM candidate cell configuration, the controller 120 may determine to perform the security key update procedure.

### Steps S312 to S323:

Steps S312 to S323 are similar to steps S110 to S123. In the present operation example, the description will proceed on the assumption that the MAC CE includes an identifier of a candidate cell managed by the base station 202.

### Step S324:

Step S324 is similar to step S311.

Since the MAC CE includes the identifier of the candidate cell managed by the base station 202, the controller 120 determines to perform the cell switch based on the second LTM candidate cell configuration. Therefore, the controller 120 may determine to perform the security key update procedure.

### Steps S326 and S327:

These steps are similar to steps S126 and S127. In this operation example, the UE 100 performs the cell switch to the cell managed by the base station 202 based on the second LTM candidate cell configuration.

### Step S328:

In a case where the cell switch is performed according to the second LTM candidate cell configuration, the controller 120 may release all the first LTM candidate cell configurations (stored in the first storage area).

Alternatively, the controller 120 may release all the first LTM candidate cell configurations not including the key update information among the first LTM candidate cell configurations. The controller 120 may newly distinguish the first LTM candidate cell configuration including the key update information among the first LTM candidate cell configurations as the second LTM candidate cell configuration.

### Step S329:

In a case where all the first LTM candidate cell configurations have been released, the controller 120 may notify the network 10 that all the first LTM candidate cell configurations have been released. In this operation example, the transmitter 111 may transmit release information indicating that all the first LTM candidate cell configurations have been released to the base station 202 in the target cell.

The release information may include, for example, identification information for identifying the base station 201 that has directly provided the LTM candidate cell configuration to the UE 100. The identification information may be, for example, a determination identifier of the source cell before performing the cell switch. Further, the release information may include information identifying the first LTM candidate cell configuration released by the UE 100.

The transmitter 111 of the UE 100 may transmit, for example, an RRC reconfiguration completion message including the release information to the base station 202. The RRC reconfiguration completion message may be transmitted based on reception processing of the RRC reconfiguration message included in the LTM candidate cell configuration.

The controller 230 of the base station 202 may execute the following processing based on the reception of the release information. Even in a case where the release information is not received, for example, in a case where the RRC connection with the UE 100 that has performed the cell switch to the cell of the base station 202 is established based on the LTM candidate cell configuration transmitted to the base station 201, the controller 230 may perform the following processing on the base station 201 that has directly provided the LTM candidate cell configuration to the UE 100.

### Step S330:

The network communicator 220 of the base station 202 transmits the release information to the base station 201. The network communicator 220 of the base station 201 receives the release information from the base station 202.

The release information may be release information received from the UE 100, or may be information indicating the content of the release information received from the UE 100. The release information may include information identifying the first LTM candidate cell configuration released by the UE 100.

### Step S331:

The controller 230 of the base station 201 may release the first LTM candidate cell configuration based on the reception of the release information.

As described above, the receiver 112 of the UE 100 receives the RRC message including the LTM configuration information used to provide one or more LTM candidate cell configurations from the base station. In a case where a cell switch command for triggering a cell switch from a source cell to a target cell is received from the base station 200 by the MAC CE, the controller 120 performs the cell switch based on the LTM candidate cell configuration of the candidate cell corresponding to the target cell among the one or more LTM candidate cell configurations. The controller 120 distinguishes and stores each of the one or more LTM candidate cell configurations into the first LTM candidate cell configuration that does not require performing the security key update procedure used for communication in the target cell and the second LTM candidate cell configuration that requires performing the security key update procedure. As a result, the UE 100 can distinguish whether or not the security key update procedure is required in a case where the LTM candidate cell configuration is applied based on the location where the LTM candidate cell configuration is stored, for example. As a result, the security key update procedure can be appropriately performed in the LTM.

In addition, the RRC message may include determination information for determining whether or not the security key update procedure needs to be performed for each of one or more LTM candidate cell configurations. The controller 120 may distinguish one or more LTM candidate cell configurations into a first LTM candidate cell configuration and a second LTM candidate cell configuration based on the determination information. In addition, the controller 230 of the base station 200 generates the RRC message including the LTM configuration information used to provide one or more LTM candidate cell configurations. The transmitter 211 transmits the RRC message to the UE 100. The transmitter 211 transmits the cell switch command for triggering the cell switch from the source cell of the base station 200 to the target cell to the UE 100 by the MAC CE. The controller 230 generates the RRC message including the determination information for determining whether or not the security key update processing is required for each of the one or more LTM candidate cell configurations so that the UE 100 distinguishes and stores each of the one or more LTM candidate cell configurations into the first LTM candidate cell configuration that does not require the security key update processing used for communication in the target cell and the second LTM candidate cell configuration that requires the security key update processing. As a result, the UE 100 can distinguish between the first LTM candidate cell configuration and the second LTM candidate cell configuration by receiving the RRC message including one or more LTM candidate cell configurations.

In addition, the controller 120 may store the first LTM candidate cell configuration in the first storage area. The controller 120 may store the second LTM candidate cell configuration in the second storage area. In a case where the cell switch is performed according to the second LTM candidate cell configuration, the controller 120 may release all the first LTM candidate cell configurations stored in the first storage area. Here, the candidate cell associated with the first LTM candidate cell configuration is a cell managed by the same base station 200. On the other hand, the candidate cell associated with the second LTM candidate cell configuration is likely to be a cell managed by a different base station 200 because the security key update procedure needs to be performed. Therefore, if the UE 100 performs the cell switch according to the second LTM candidate cell configuration, and then performs the cell switch according to the first LTM candidate cell configuration, it may be necessary to perform a security key update procedure. Since the UE 100 distinguishes that the first LTM candidate cell configuration does not require performing the security key update procedure, by releasing all the first LTM candidate cell configurations stored in the first storage area, it is possible to prevent omission of performing the security key update procedure even though it is necessary to perform the security key update procedure.

In addition, in a case where all the first LTM candidate cell configurations have been released, the controller 120 may notify the network 10 that all the first LTM candidate cell configurations have been released. As a result, the network 10 can learn that the UE 100 releases the first LTM candidate cell configuration. As a result, it can be avoided that the network 10 instructs to perform the cell switch according to the first LTM candidate cell configuration.

### (Distinguishing method)

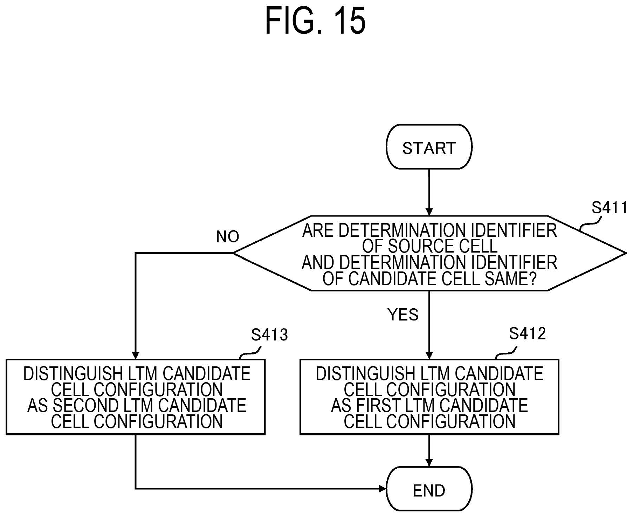

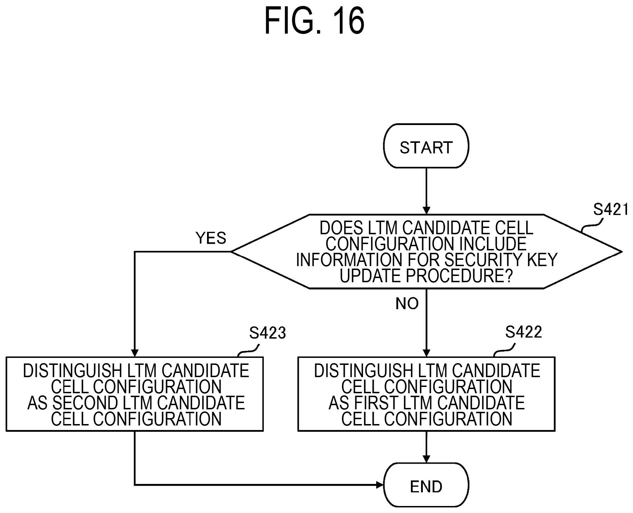

Next, an example of a method of distinguishing the UE 100 will be described with reference to Figs. 15 and 16. The controller 120 of the UE 100 may distinguish the LTM candidate cell configurations based on determination information for determining whether or not the security key update procedure needs to be performed for each of one or more LTM candidate cell configurations. The controller 120 may distinguish the one or more LTM candidate cell configurations into the first LTM candidate cell configuration and the second LTM candidate cell configuration based on the determination information. The controller 120 of the UE 100 may distinguish the LTM candidate cell configuration by using at least any of the following methods.

Note that the determination information may be update determination information. As described above, the RRC message (for example, the RRC reconfiguration message in step S305) may include the determination information.

In the first method, the controller 120 distinguishes the LTM candidate cell configuration based on a determination identifier as the update determination information (see Fig. 15).

### Step S411:

The controller 120 determines whether or not a determination identifier of the source cell (hereinafter, referred to as a source determination identifier) and a determination identifier of the candidate cell corresponding to the target cell (hereinafter, referred to as a candidate determination identifier) are the same. For example, the controller 120 selects a candidate determination identifier associated with one LTM candidate cell configuration among the one or more LTM candidate cell configurations. In a case where the source determination identifier and the selected candidate determination identifier are the same, the controller 120 executes the processing of step S412. On the other hand, in a case where the source determination identifier and the selected candidate determination identifier are different, the controller 120 executes the processing of step S413.

### Step S412:

The controller 120 distinguishes the LTM candidate cell configuration associated with the selected candidate determination identifier as the first LTM candidate cell configuration.

### Step S413:

The controller 120 distinguishes the LTM candidate cell configuration associated with the selected candidate determination identifier as the second LTM candidate cell configuration.

The controller 120 executes the processing of steps S411 to S413 for all of the one or more LTM candidate cell configurations. As a result, the one or more LTM candidate cell configurations are distinguished into the first LTM candidate cell configuration and the second LTM candidate cell configuration.

As described above, the RRC message may include the determination identifier for identifying the management source of the cell as the determination information. The controller 120 may distinguish the LTM candidate cell configuration of the candidate cell having the same determination identifier as the determination identifier of the source cell as the first LTM candidate cell configuration. The controller 120 may distinguish the LTM candidate cell configuration of the candidate cell having a determination identifier different from the determination identifier of the source cell as the second LTM candidate cell configuration. As a result, since the controller 120 can identify the management source of the cell, it is possible to avoid not performing the security key update procedure in a case where the management sources of the source cell and the target cell are different.

In the second method, the controller 120 distinguishes the LTM candidate cell configuration based on key update information as the update determination information (see Fig. 16).

### Step S421:

The controller 120 determines whether or not the LTM candidate cell configuration includes information for a security key update procedure (the key update information). For example, the controller 120 determines whether or not each LTM candidate cell configuration among one or more LTM candidate cell configurations includes the key update information.

The controller 120 may execute the processing of step S422 for the LTM candidate cell configuration not including the information for the update procedure among the one or more LTM candidate cell configurations. The controller 120 may execute the processing of step S423 for the LTM candidate cell configuration including the information for the update procedure among the one or more LTM candidate cell configurations.

Further, the controller 120 may determine whether or not each LTM candidate cell configuration includes the key update information based on information (hereinafter, predetermined information) indicating whether or not each of the one or more LTM candidate cell configurations includes the key update information. Note that the predetermined information may indicate the presence or absence of the key update information in each LTM candidate cell configuration.

In a case where the predetermined information indicates that the LTM candidate cell configuration does not include the key update information, the controller 120 may execute the processing of step S422 for the LTM candidate cell configuration. On the other hand, in a case where the predetermined information indicates that the LTM candidate cell configuration includes the key update information, the controller 120 may execute the processing of step S423 for the LTM candidate cell configuration.

The predetermined information may be included, for example, in a field (for example, field E11 in Fig. 8) different from the LTM configuration information (field E12). Furthermore, the predetermined information may be included in a field that is in the LTM configuration information (field E12) and is another field (for example, the field E21 in Fig. 8) different from the field in the LTM addition/modification list. In this case, the predetermined information may indicate whether or not all LTM candidate cell configurations include key update information.

The predetermined information may be included in each of the one or more LTM candidate cell configurations. Further, the predetermined information may be included, for example, in a field (for example, the field E311) that is in the LTM candidate cell configuration (for example, the field E31) and is different from the field in the LTM candidate configuration information (for example, the field E312). In addition, the predetermined information may be included, for example, in a field (for example, the field E51) in RRC reconfiguration (for example, the field E41) applied in a case where the cell switch is performed. In this case, the predetermined information may indicate whether or not the LTM candidate cell configuration including the predetermined information includes key update information.

### Step S422:

The controller 120 distinguishes the LTM candidate cell configuration as the first LTM candidate cell configuration. That is, the controller 120 distinguishes the LTM candidate cell configuration not including the key update information as the first LTM candidate cell configuration.

### Step S423:

The controller 120 distinguishes the LTM candidate cell configuration as the second LTM candidate cell configuration. That is, the controller 120 distinguishes the LTM candidate cell configuration including the key update information as the second LTM candidate cell configuration.

As described above, the controller 120 of the UE 100 may distinguish the LTM candidate cell configuration not including the key update information among the one or more LTM candidate cell configurations as the first LTM candidate cell configuration. The controller 120 may distinguish the LTM candidate cell configuration including the key update information among the one or more LTM candidate cell configurations as the second LTM candidate cell configuration. As a result, the security key update procedure can be appropriately performed in the LTM by performing the security key update procedure for the LTM candidate cell configuration that can perform the security key update procedure while omitting the performance of the security key update procedure for the LTM candidate cell configuration (only) that cannot perform the security key update procedure.

Further, the LTM configuration information may include information (that is, the predetermined information) indicating whether or not each of one or more LTM candidate cell configurations includes information for an update procedure. The controller 120 may distinguish the one or more LTM candidate cell configurations into the first LTM candidate cell configuration and the second LTM candidate cell configuration based on the information indicating whether or not each of the one or more LTM candidate cell configurations includes information for the update procedure. As a result, the controller 120 can grasp whether or not each of the one or more LTM candidate cell configurations includes the information for the update procedure based on the predetermined information without confirming the presence or absence of the key update information for each LTM candidate cell configuration.

### (Other Embodiments)

In the above-described embodiment, for example, the controller 120 of the UE 100 may prioritize the first method over the second method in the method of distinguishing in the second operation example. Therefore, the controller 120 may distinguish, for example, even the LTM candidate cell configuration including the key update information as the first LTM candidate cell configuration. Alternatively, the controller 120 may prioritize the second method over the first method. Therefore, even in a case where the source determination identifier and the selected candidate determination identifier are different, the controller 120 may distinguish them as the first LTM candidate cell configuration.

In the above-described embodiment, "releasing" may be replaced with, for example, any of discarding, ignoring, clearing, deactivating, and the like.

In the above-described embodiment, the mobile communication system based on the NR is described as the example of the mobile communication system 1. However, the mobile communication system 1 is not limited to the example. The mobile communication system 1 may be a system conforming to a TS of LTE (Long Term Evolution) or another generation system (for example, sixth generation) of the 3GPP standard. The base station 200 may be an eNB that provides E-UTRA user plane and control plane protocol terminations toward the UE 100 in the LTE. The mobile communication system 1 may be a system conforming to a TS defined in a standard other than the 3GPP standard. The base station 200 may be an integrated access and backhaul (IAB) donor or an IAB node.

In the above-described embodiment, the mobile communication system based on the NR is described as the example of the mobile communication system 1. However, the mobile communication system 1 is not limited to the example. The mobile communication system 1 may be a system conforming to a TS of LTE or another generation system (for example, sixth generation) of the 3GPP standard. The base station 200 may be an eNB that provides E-UTRA user plane and control plane protocol terminations toward the UE 100 in the LTE. The mobile communication system 1 may be a system conforming to a TS defined in a standard other than the 3GPP standard.

The steps in the operation of the above-described embodiment are not necessarily executed in the chronological order according to the order described in the flowchart or the sequence diagram. For example, the steps in the operation may be performed in an order different from the order described in the flowchart or the sequence diagram or may be performed in parallel. Also, a part of the steps in the operation may be deleted, or additional steps may be added to the processing. Further, each operation flow described above is not limited to a case of being necessarily implemented separately and independently, and two or more operation flows can be implemented in combination. For example, a part of steps of one operation flow may be added to another operation flow, or a part of steps of one operation flow may be replaced with a part of steps of another operation flow.

A program for causing a computer to execute each of the processes executed by the UE 100 or the base station 200 may be provided. The program may be recorded in a computer-readable medium. The program can be installed in the computer using the computer-readable medium. Here, the computer-readable medium in which the program is recorded may be a non-transitory recording medium. The non-transitory recording medium is not particularly limited and may be, for example, a recording medium such as a compact disk read only memory (CD-ROM) or a digital versatile disc read only memory (DVD-ROM). Also, circuits that execute the processes executed by the UE 100 or the base station 200 may be integrated, and at least a part of the UE 100 or the base station 200 may be configured as a semiconductor integrated circuit (a chipset or a system on chip (SoC)).

In the above-described embodiment, the term "transmit" may mean executing processing of at least one layer in the protocol stack used for transmission or may mean physically transmitting a signal in a wireless or wired manner. Alternatively, the term "transmit" may mean a combination of executing the processing of at least one layer and physically transmitting the signal in a wireless or wired manner as described above. Similarly, the term "receive" may mean executing processing of at least one layer in a protocol stack used for reception or may mean physically receiving a signal in a wireless or wired manner. Alternatively, the term "receive" may mean a combination of executing the processing of at least one layer and physically receiving the signal in a wireless or wired manner as described above. Similarly, the term "obtain/acquire" may mean obtaining/acquiring information from stored information, may mean obtaining/acquiring information from information received from another node, or may mean obtaining/acquiring information by generating information. Similarly, the terms "based on" and "depending on/in response to" do not mean "based only on" or "depending only on/in response only to" unless explicitly stated otherwise. The term "based on" means both "based only on" and "at least partially based on". Similarly, the term "depending on/in response to" means both "depending only on/in response only to" and "at least partially depending on/at least partially in response to". Similarly, the terms "include" and "comprise" do not mean including only enumerated items but mean both of including only enumerated items and including more items in addition to the enumerated items. Similarly, in the present disclosure, the term "or" does not mean exclusive OR, and means OR. Further, any reference to elements using designations such as "first", "second", and the like used in the present disclosure does not generally limit the amount or the order of the elements. Such designations may be used in the present disclosure as a convenient method to distinguish between two or more elements. References to first and second elements do not mean that only two elements can be employed therein or that the first element should precede the second element in any form. In the present disclosure, for example, in a case where articles such as "a", "an", and "the" in English are added by translation, such articles cover the plural meaning unless the context clearly indicates otherwise.

Although the present disclosure has been described according to examples, it is understood that the present disclosure is not limited to the examples or structures. The present disclosure also includes various modified examples or modifications made within an equivalent range. Additionally, various combinations or modes, or other combinations or modes including only one element, more elements, or fewer elements also fall within the scope and spirit of the present disclosure.

### (Supplementary Notes)

Features related to the above-described embodiments are additionally described.

### (Supplementary Note 1)

A communication apparatus including:
a receiver configured to receive a cell switch command that triggers a cell switch from a source cell to a target cell from a base station by a medium access control (MAC) control element (CE); and
a controller configured to perform the cell switch based on the cell switch command,
in which the controller is configured to determine whether or not to perform a security key update procedure used for communication in the target cell in a case where the cell switch is performed based on determination information received from the base station.

### (Supplementary Note 2)

The communication apparatus according to supplementary note 1,
in which the determination information is included in the MAC CE including the cell switch command.

### (Supplementary Note 3)

The communication apparatus according to supplementary note 1 or 2,
in which the controller is configured to determine whether or not to perform the security key update procedure based on whether or not the determination information is included in the MAC CE including the cell switch command.

### (Supplementary Note 4)

The communication apparatus according to any one of supplementary notes 1 to 3,
in which the controller includes a MAC processor configured to execute processing in a MAC layer, and
in a case where the MAC CE including the cell switch command includes an identifier of the target cell and the determination information, the MAC processor is configured to notify an upper layer of the MAC layer of the identifier of the target cell and content of the determination information.

### (Supplementary Note 5)

The communication apparatus according to any one of supplementary notes 1 to 4,
in which the receiver is configured to receive a radio resource control (RRC) message including a determination identifier for identifying a management source of a cell as the determination information from the base station, and
the controller is configured to:
   determine, in a case where a determination identifier of the source cell is the same as a determination identifier of a candidate cell corresponding to the target cell, not to perform the security key update procedure; and
   determine, in a case where a determination identifier of the source cell and a determination identifier of the candidate cell corresponding to the target cell are different, to perform the security key update procedure.

### (Supplementary Note 6)

The communication apparatus according to supplementary notes 5,
in which the controller is configured to store, after performing the cell switch, the determination identifier of the candidate cell corresponding to the target cell as the determination identifier of the source cell.

### (Supplementary Note 7)

The communication apparatus according to any two of supplementary notes 1 to 6,
in which the receiver is configured to receive a radio resource control (RRC) message from the base station, the RRC message including LTM configuration information used to provide one or more Layer 1/Layer 2 triggered mobility (LTM) candidate cell configurations, and
in a case where it is determined not to perform the security key update procedure based on the determination information, the controller is configured to omit the security key update procedure even if the LTM candidate cell configuration of the candidate cell corresponding to the target cell includes information for the update procedure.

### (Supplementary Note 8)

The communication apparatus according to any one of supplementary notes 1 to 7,
in which the controller is configured to omit transmission of a layer 1 (L1) measurement report for the source cell to the source cell.

### (Supplementary Note 9)

The communication apparatus according to any one of supplementary notes 1 to 8,
in which the controller is configured to:
invalidate the LTM candidate cell configuration of a candidate cell corresponding to the target cell based on performing the cell switch to the target cell; and
validate the invalidated LTM candidate cell configuration based on performing the cell switch after the target cell is set as the source cell.

### (Supplementary Note 10)

A base station including:
a transmitter configured to transmit a cell switch command that triggers a cell switch from a source cell to a target cell to a communication apparatus by a medium access control (MAC) control element (CE),
in which the transmitter is configured to transmit determination information used by the communication apparatus to determine whether or not to perform a security key update procedure used for communication in the target cell in a case where the cell switch is performed to the communication apparatus.

### (Supplementary Note 11)

A communication method performed in a communication apparatus, including the steps of:
receiving a cell switch command that triggers a cell switch from a source cell to a target cell from a base station by a medium access control (MAC) control element (CE);
performing the cell switch based on the cell switch command; and
determining whether or not to perform a security key update procedure used for communication in the target cell in a case where the cell switch is performed based on determination information received from the base station.

### (Supplementary Note 12)

A communication apparatus (100), including:
a receiver (112) configured to receive, from a base station (200), a radio resource control (RRC) message including LTM configuration information used to provide Layer 1/Layer 2 triggered mobility (LTM) candidate information, and receive, from the base station by using a medium access control (MAC) control element (CE), a cell switch command that triggers a cell switch; and
a controller (120) configured to perform an LTM cell switch based on the cell switch command,
in which the controller is configured to determine, based on an identifier included in the RRC message, whether or not to perform a security key update procedure in a case where the LTM cell switch is performed.

### (Supplementary Note 13)

The communication apparatus according to supplementary note 12,
in which the identifier includes an identifier of a serving cell and an identifier of a candidate cell.

### (Supplementary Note 14)

The communication apparatus according to supplementary note 13,
in which, in a case where a value of the identifier of the serving cell is not the same as a value of the identifier of the candidate cell, the controller is configured to store the value of the identifier of the candidate cell as the value of the identifier of the serving cell.

### (Supplementary Note15)

A base station (200), including:
a transmitter (211) configured to transmit, to a communication apparatus (100), a radio resource control (RRC) message including LTM configuration information used to provide Layer 1/Layer 2 triggered mobility (LTM) candidate information, and transmit, to the communication apparatus by using a medium access control (MAC) control element (CE), a cell switch command that triggers a cell switch; and
a controller (230) configured to control performance of an LTM cell switch based on the cell switch command,
in which the controller is configured to configure, based on an identifier included in the RRC message, whether or not to perform a security key update procedure in a case where the LTM cell switch is performed.

### (Supplementary Note 16)

The base station according to supplementary note 15,
in which the identifier includes an identifier of a serving cell and an identifier of a candidate cell.

### (Supplementary Note 17)

The base station according to supplementary note 16,
in which, in a case where a value of the identifier of the serving cell is not the same as a value of the identifier of the candidate cell, the value of the identifier of the candidate cell is stored as the value of the identifier of the serving cell.

### (Supplementary Note18)

A communication method of a communication apparatus (100), including the steps of:
receiving, from a base station (200), a radio resource control (RRC) message including LTM configuration information used to provide Layer 1/Layer 2 triggered mobility (LTM) candidate information;
receiving, from the base station by using a medium access control (MAC) control element (CE), a cell switch command that triggers a cell switch; and
performing an LTM cell switch based on the cell switch command,
in which the step of performing the LTM cell switch determines, based on an identifier included in the RRC message, whether or not to perform a security key update procedure in a case where the LTM cell switch is performed.

### (Supplementary Note 19)

The communication method according to supplementary note 18,
in which the identifier includes an identifier of a serving cell and an identifier of a candidate cell.

### (Supplementary Note 20)

The communication method according to supplementary note 19,
in which, in the step of performing the LTM cell switch, in a case where a value of the identifier of the serving cell is not the same as a value of the identifier of the candidate cell, the value of the identifier of the candidate cell is stored as the value of the identifier of the serving cell.

## Claims

1. A communication apparatus (100), comprising:
a receiver (112) configured to receive, from a base station (200), a radio resource control (RRC) message including LTM configuration information used to provide Layer 1/Layer 2 triggered mobility (LTM) candidate information, and receive, from the base station by using a medium access control (MAC) control element (CE), a cell switch command that triggers a cell switch; and
a controller (120) configured to perform an LTM cell switch based on the cell switch command,
wherein the controller is configured to determine, based on an identifier included in the RRC message, whether or not to perform a security key update procedure in a case where the LTM cell switch is performed.

2. The communication apparatus according to claim 1,
wherein the identifier includes an identifier of a serving cell and an identifier of a candidate cell.

3. The communication apparatus according to claim 2,
wherein, in a case where a value of the identifier of the serving cell is not the same as a value of the identifier of the candidate cell, the controller is configured to store the value of the identifier of the candidate cell as the value of the identifier of the serving cell.

4. A base station (200), comprising:
a transmitter (211) configured to transmit, to a communication apparatus (100), a radio resource control (RRC) message including LTM configuration information used to provide Layer 1/Layer 2 triggered mobility (LTM) candidate information, and transmit, to the communication apparatus by using a medium access control (MAC) control element (CE), a cell switch command that triggers a cell switch; and
a controller (230) configured to control performance of an LTM cell switch based on the cell switch command,
wherein the controller is configured to configure, based on an identifier included in the RRC message, whether or not to perform a security key update procedure in a case where the LTM cell switch is performed.

5. The base station according to claim 4,
wherein the identifier includes an identifier of a serving cell and an identifier of a candidate cell.

6. The base station according to claim 5,
wherein, in a case where a value of the identifier of the serving cell is not the same as a value of the identifier of the candidate cell, the value of the identifier of the candidate cell is stored as the value of the identifier of the serving cell.

7. A communication method of a communication apparatus (100), comprising the steps of:
receiving, from a base station (200), a radio resource control (RRC) message including LTM configuration information used to provide Layer 1/Layer 2 triggered mobility (LTM) candidate information;
receiving, from the base station by using a medium access control (MAC) control element (CE), a cell switch command that triggers a cell switch; and
performing an LTM cell switch based on the cell switch command,
wherein the step of performing the LTM cell switch includes determining, based on an identifier included in the RRC message, whether or not to perform a security key update procedure in a case where the LTM cell switch is performed.

8. The communication method according to claim 7,
wherein the identifier includes an identifier of a serving cell and an identifier of a candidate cell.

9. The communication method according to claim 8,
wherein, in the step of performing the LTM cell switch, in a case where a value of the identifier of the serving cell is not the same as a value of the identifier of the candidate cell, the value of the identifier of the candidate cell is stored as the value of the identifier of the serving cell.
